# EUROPÄISCHE PATENTSCHRIFT

(11) **EP 3 924 231 B1**
(45) Veröffentlichungstag und Bekanntmachung des Hinweises auf die Patenterteilung: **13.08.2025**
(21) Anmeldenummer: 20706153.2
(22) Anmeldetag: 12.02.2020
(51) Int. Cl.: B60T 8/40, B60T 8/88

(54) **AUSFALLSICHERES BREMSSYSTEM**
FAIL-SAFE BRAKE SYSTEM
SYSTÈME DE FREINAGE ÈPROUVÉ AU CAS DE DÉFAILLANCE

(30) Priorität: 12.02.2019 DE 102019103464
(43) Veröffentlichungstag der Anmeldung: 22.12.2021
(73) Patentinhaber: IPGATE AG, 8808 Pfäffikon SZ (CH)
(72) Erfinder: LEIBER, Thomas, 22203 Rogoznica (HR); LEIBER, Heinz, 71739 Oberriexingen (DE)
(74) Vertreter: Peterreins Schley
(86) Internationale Anmeldenummer: PCT/EP2020/053667
(87) Internationale Veröffentlichungsnummer: WO 2020/165295

(56) Entgegenhaltungen:
- DE-A1- 19 914 403
- DE-A1- 4 340 467
- DE-U1- 202015 008 975
- US-B1- 6 517 170

## Beschreibung

### Technisches Gebiet

Die vorliegende Erfindung betrifft ein hydraulisches Bremssystem mit mindestens zwei Bremskreisen und mindestens einer Druckbereitstellungseinheit.

### Hintergrund

Die Anforderungen, insbesondere Sicherheitsanforderungen (z.B. Zweikreisbremsanlage), haben einen großen Einfluss auf die Gestaltung eines Bremssystems und steigen mit dem Automatisierungsgrad (Stufe null bis fünf der Norm SAE J3016) des Kraftfahrzeugs. So muss beim autonomen Fahren für Stufe eins oder höher (z.B. für einen Abstandsregeltempomat) die Bremskraft auch ohne Bremspedalbetätigung durch den Fahrer eines Fahrzeugs gewährleistet sein. Dafür ist mindestens eine Druckbereitstellungseinheit in einem hydraulischen Bremssystem und eine entsprechend ausgebildete elektronische Sensorik- und Steuereinheit erforderlich. Die Akzeptanz von Fehlern hängt ebenfalls von der Automatisierungsstufe ab. In Stufe zwei sind Einzelfehler erlaubt, wenn Abbremsungen mit mindestens ca. 0,3 g möglich sind, während in Stufe drei bereits Abbremsungen mit mindestens ca. 0,5 g im Falle von Einzelfehlern gewährleistet sein sollten. Für Stufe drei und höher muss ebenfalls die ABS/ESP-Funktion auch im Einzelfehlerfall gewährleistet sein. Im Allgemeinen werden Doppelfehler akzeptiert, wenn die Ausfallwahrscheinlichkeit auf Basis von ppm- und FIT-Daten gering ist.

DE 4340467 A1 offenbart eine hydraulische Fahrzeugbremsanlage mit einer per Pedal in Betrieb setzbaren zweikreisigen Notbremsdruckquelle und mit aus dieser durch Notbremshauptleitungen versorgbaren Radbremsen sowie mit einer Fremdkraftbremseinrichtung, die eine Fremdkraftquelle und zwischen dieser und der wenigstens eine Radbremse wenigstens eine Ventilanordnung hat, mittels der unter Verwendung von Druckmittel aus der Fremdkraftquelle Bremsdrücke erzeugbar sind und auch absenkbar sind. Zwischen die Notbremsdruckquelle und die Radbremsen ist wenigstens eine Ventilanordnung eingebaut, die im Notbremsbetrieb die Notbremsdruckquelle mit den Radbremsen verbindet und im Fremdkraftbremsbetrieb die Notbremsdruckquelle von den Radbremsen trennt. Diese Ventilanordnung ist derart ausgestaltet, dass sie im Fremdkraftbremsbetrieb aus Radbremsen abzulassendes Druckmittel durch die Notbremshauptleitungen und eine Rücklaufleitung entweichen lässt zu einem Reservoir der Notbremsdruckquelle. Diese Ventilanordnung ist mittels kleiner Steuerkraft steuerbar und deshalb preisgünstig. Die Fahrzeugbremsanlage ist geeignet für Kraftfahrzeuge.

DE 19914403 A1 offenbart ein Bremssystem, bei dem eine Hydraulikflüssigkeit aus einem Druckspeicher über Ventilmittel in jeweilige Radbremszylinder einsteuerbar ist, wobei die Hydraulikflüssigkeit mittels einer Pumpe in den Druckspeicher förderbar ist, mit einem an der Ausgangsseite der Pumpe angeordneten Drucksensor zur Ermittlung von beim Pumpenbetrieb in der Hydraulikflüssigkeit auftretenden Druckpulsationen und Mitteln zur Auswertung der Druckpulsationen zum Erhalt eines Messsignals zur Steuerung und/oder Überwachung der Pumpe.

DE 202015008975 U1 offenbart eine Bremsanlage für Kraftfahrzeuge, mit einem Hauptbremszylinder und einem darin angeordneten Schwimmkolben, welcher einen ersten und zweiten Druckraum voneinander abdichtend trennt, wobei der erste Druckraum mit einem ersten Bremskreis und der zweite Druckraum mit einem zweiten Bremskreis hydraulisch verbunden ist; mit einem unter Atmosphärendruck stehenden Druckmittelvorratsbehälter; mit Radbremsen; mit einer elektrisch steuerbaren Druckversorgereinrichtung zum Druckaufbau und Druckabbau in den Radbremsen; mit einem Ventilblock mit einem stromlos offenen Einlassventil/Schaltventil für jede Radbremse und mit mindestens einem Auslassventil; wobei jede Radbremse über das ihr zugeordnete Schaltventil mit einer Druckkammer des Hauptbremszylinders hydraulisch verbindbar ist und auch direkt oder über Trennventile mit der Druckversorgereinheit hydraulisch verbunden bzw. verbindbar ist, wobei jeder Bremskreis mit der Druckversorgereinrichtung hydraulisch verbunden oder mittels mindestens eines steuerbaren Ventils hydraulisch mit der Druckversorgereinrichtung verbindbar ist; wobei beide Druckräume zumindest im normalen Bremskraftverstärkerbetrieb sowohl beim Druckaufbau als auch beim Druckabbau in mindestens einer Radbremse mit einem Druck druckbeaufschlagt sind, der dem von der Druckversorgereinrichtung erzeugtem Druck entspricht, und dass in Bremssituationen, bei denen die Druckänderung in mindestens einer Radbremse mit hoher Dynamik, insbesondere im ABS/ESP-Betrieb, erfolgen muss, gleichzeitig in mindestens einer Radbremse die Druckänderung mittels der Volumensteuerung der Druckversorgereinrichtung erfolgt und in mindestens einer anderen Radbremse, insbesondere zeitgleich, ein Druckabbau über mindestens ein Auslassventil erfolgt.

US6517170B1 offenbart ein Bremssystem, bei dem eine Hydraulikflüssigkeit von einem Druckspeicher über ein Ventil in einzelne Radbremszylinder geleitet werden kann, wobei die Hydraulikflüssigkeit von einer Pumpe in den Druckspeicher geleitet wird, mit einem auf der Auslassseite der Pumpe angeordneten Drucksensor zum Erfassen von beim Betrieb der Pumpe auftretenden Druckpulsationen in der Hydraulikflüssigkeit und mit einer Anordnung zum Auswerten der Druckpulsationen, um ein Messsignal zum Steuern und/oder Überwachen der Pumpe zu erhalten.

### Zusammenfassung der Erfindung

Die vorliegende Erfindung betrifft ein Bremssystem mit zwei Bremskreisen. Bevorzugt werden zumindest die Anforderungen der Stufe zwei gemäß Norm SAE J3016 erfüllt, wobei darüber hinaus Doppelfehler, die zum Totalausfall des Bremssystems führen, vermieden werden können und sogenannte schlafende Einzelfehler durch Redundanzen und Diagnosen rechtzeitig erkannt werden können.

Die vorliegende Erfindung wird durch Anspruch 1 definiert.

Offenbart wird dazu ein Bremssystem für ein Fahrzeug, folgende Komponenten umfassend:
- mindestens zwei hydraulische Bremskreise (BK1, BK2) mit jeweils mindestens einer hydraulisch wirkenden Radbremse (RB1, RB2, RB3, RB4);
- mindestens eine Druckversorgungseinrichtung (DV), welche über eine hydraulische Leitung mit einem Bremskreis (BK1, BK2) verbunden ist;
- ein Schaltventil (SV1, SV2, SV3, SV4) je hydraulisch wirkender Radbremse (RB1, RB2, RB3, RB4), welches jeweils eine hydraulisch wirkende Radbremse (RB1, RB2, RB3, RB4) mit einem der beiden Bremskreise (BK1, BK2) schaltbar verbindet;
- mindestens eine über mindestens ein Auslassschaltventil (ZAV) schaltbare hydraulische Verbindung zwischen mindestens einem der Bremskreise (BK1, BK2) und einem Vorratsbehälter (VB);
- und ein hydraulisches Bremspedalsystem, von dem ein hydraulischer Ausgang über ein Einspeiseschaltventil (FV) schaltbar an mindestens einen Bremskreis (BK1, BK2) gekoppelt ist;
- mindestens eine über mindestens ein Bypass-Schaltventil (BP1) schaltbare hydraulische Verbindung zwischen den beiden Bremskreisen (BK1 und BK2).

Der Druckabbau in der mindestens einen hydraulisch wirkenden Radbremse (RB1, RB2, RB3, RB4) kann durch Öffnung des Auslassschaltventils (ZAV) und des zugehörigen Schaltventiles (SV1, SV2, SV3, SV4) erfolgen.

Die mindestens eine Druckversorgungseinrichtung (DV) kann eine Rotationspumpe umfassen. Rotationspumpen sind zumeist kostengünstiger als beispielsweise Plungerpumpen.

Die Rotationspumpe kann als Zahnradpumpe oder als Mehrkolbenpumpe, insbesondere Dreikolbenpumpe, ausgeführt sein.

Die Druckversorgungseinrichtung (DV) kann über ein zur Druckversorgungseinrichtung (DV) hin schließendes Rückschlagventil (RV3) oder über ein Magnetventil mit zumindest einem der Bremskreise (BK1, BK2) verbunden sein.

Die Mehrkolbenpumpe kann direkt mit zumindest einem der Bremskreise (BK1, BK2) verbunden sein, wobei direkt verbunden bedeutet, dass kein Ventil bzw. keine Druckbeeinflussungsvorrichtung zwischen der Mehrkolbenpumpe und dem zumindest einen Bremskreis (BK1, BK2) vorhanden ist. Bei geeigneter Ausführung der Mehrkolbenpumpe kann durch den Betrieb der Pumpe selber ein Rückfluss von Bremsflüssigkeit verhindert werden, so dass ein Ventil eingespart werden kann, welches einen Rückfluss verhindert.

Die Druckversorgungseinrichtung (DV) kann einen Motor aufweisen, wobei der Motor vorzugsweise ein bürstenloser Gleichstrommotor ist, der insbesondere eine redundante Wicklung und/oder einen Anschluss mit 2 x 3 Phasensteuerung aufweist.

Die Schaltventile (SV1, SV2, SV3, SV4) können stromlos offene Schaltventile sein, und das Bypass-Schaltventil (BP1) kann ein stromlos offenes Bypass-Schaltventil sein, und das Auslassschaltventil (ZAV) kann ein stromlos geschlossenes Auslassschaltventil sein, und das Einspeiseschaltventil (FV) kann ein stromlos offenes Einspeiseschaltventil sein.

Die Schaltventile (SV1, SV2, SV3, SV4) können derart ausgeführt und angeschlossen sein, dass ein Restdruck in einer Radbremse (RB1, RB2, RB3, RB4) im stromlosen Fall das jeweilige Schaltventil (SV1, SV2, SV3, SV4) öffnet. Hierdurch kann ein ungewünschter Restdruck im Bremssystem im Fehlerfall vermieden werden.

Die zwei hydraulischen Bremskreise (BK1, BK2) können genau einen, zwei oder mehrere Drucksensoren (DG) aufweisen. Für die Druckerfassung ist ein einziger Drucksensor für beide Bremskreise (BK1, BK2) ausreichend. Zur Erhöhung der Sicherheit kann in jedem Bremskreis jeweils ein Drucksensor eingesetzt werden. Zusätzlich können auch weitere redundante Sensoren eingesetzt werden.

Eine ABS- und/oder ESP-Regelung kann über mindestens ein Schaltventil (SV1, SV2, SV3, SV4) und das Auslassschaltventil (ZAV) erfolgen.

Es muss kein Ventil zwischen dem Auslassschaltventil (ZAV) und zumindest einem der Schaltventile (SV3, SV4) eines der Bremskreise (BK2) vorhanden sein. Bevorzug sind zwei Schaltventile (SV3, SV4) direkt mit dem zentralen Auslassschaltventil (ZAV) verbunden. Hierdurch kann ein Ventil eingespart werden.

Es muss kein Ventil zwischen dem Bypass-Schaltventil (BP1) und zweien, bevorzugt allen vieren, der Schaltventile (SV1, SV2, SV3, SV4) vorhanden sein.

Es ist möglich, dass nur genau das Auslassschaltventil (ZAV) die Bremskreise (BK1, BK2) schaltbar mit dem Vorratsbehälter (VB) verbindet.

Es ist möglich, dass jede Radbremse (RB1, RB2, RB3, RB4) nur genau das zugehörige Schaltventil (SV1, SV2, SV3, SV4) aufweist.

Ein zweites Auslassschaltventil (ZAV2) kann vorhanden sein, das direkt mit dem Ausgang der Druckversorgungseinrichtung (DV) bzw. mit einem zugehörigen Rückschlagventil (RV3) verbunden ist und mit dem Vorratsbehälter (VB) schaltbar verbindet, insbesondere wobei nur genau das Auslassschaltventil (ZAV) und das zweites Auslassschaltventil (ZAV2) die Bremskreise (BK1, BK2) schaltbar mit dem Vorratsbehälter (VB) verbinden. Das zweite Auslassschaltventil (ZAV2) stellt eine weitere Möglichkeit dar, die Sicherheit zu erhöhen.

Die zwei hydraulischen Bremskreise (BK1, BK2) können über das Bypass-Schaltventil (BP1) sowie ein weiteres Bypass-Schaltventil (BP2), die in Reihe geschaltet sind, miteinander verbunden sein, wobei das Auslassschaltventil (ZAV) mit einem Leitungsabschnitt zwischen den beiden Bypass-Schaltventilen (BP1, BP2) verbunden ist.

Zusätzlich kann ein Trennschaltventil (TV) vorhanden sein, das direkt mit dem Ausgang der Druckversorgungseinrichtung (DV) bzw. mit einem zugehörigen Rückschlagventil (RV3) verbunden ist und direkt mit mindestens einem der Schaltventile (SV1, SV2) verbunden ist.

Aspekt 18: Bremssystem gemäß einem der vorhergehenden Aspekte, wobei das hydraulische Bremspedalsystem einen Einzel-Hauptzylinder (SHZ) oder einen Doppel-Hauptzylinder (DHZ) aufweist. Das hier beschriebene System kann bereits mit einem Einzel-Hauptzylinder, der fehlersicher gestaltet werden kann, zumindest die Anforderungen der Stufe zwei gemäß Norm SAE J3016 erfüllen.

Das Bremssystem kann weiterhin einen Wegsimulator (WS) aufweisen.

Der Wegsimulator (WS) kann mit dem Einzel-Hauptzylinder (SHZ) bzw. dem Doppel-Hauptzylinder (DHZ) über ein optionales schaltbares Wegsimulatortrennventil (14) verbunden sein.

Der Einzel-Hauptzylinder (SHZ) bzw. der Doppel-Hauptzylinder (DHZ) kann einen Kraftwegsensor (KWS) aufweisen. Der Einzel-Hauptzylinder (SHZ) bzw. der Doppel-Hauptzylinder (DHZ) muss aber keinen Kraftwegsensor (KWS) aufweisen.

Das Bremssystem kann als brake-by-wire System ausgelegt sein.

Das hydraulische Bremspedalsystem kann eine Entlüftungsöffnung aufweisen, die über eine Parallelschaltung von einer Drossel (Dr1) und einem zum Vorratsbehälter (VB) schließenden Rückschlagventil (RV1) mit dem Vorratsbehälter (VB) verbunden ist. Die Drossel (Dr1) und das Rückschlagventil (RV1) dienen als Redundanz zur Primärdichtung (D2).

Das Bremssystem kann weiterhin eine Steuer- und Regeleinheit (ECU) aufweisen, die die Steuerung bzw. Regelung des Bremssystems vornimmt.

### Kurzbeschreibung der Figuren

**Fig. 1a** zeigt eine erste mögliche Ausführungsform des erfindungsgemäßen Bremssystems in einer minimalen Ventilanordnung in der HCU mit einem Bypassventil (BP1) und einem zentralen Auslassventil (ZAV).
**Fig. 1b** zeigt eine zweite mögliche Ausführungsform des erfindungsgemäßen Bremssystems in einer erweiterten Ventilanordnung in der HCU mit zwei Bypassventilen (BP1 und BP2), zwei (zentralen) Auslassventilen (ZAV1, ZAV2), sowie einem Trennventil (TV).
**Fig. 2** zeigt den Aufbau eines Diagnoseventils (V_{D}).
**Fig. 3a** zeigt eine erfindungsgemäße Ausführungsform für die Anbindung zwischen dem Einzelhauptzylinder und dem Vorratsbehälter (VB) mit zwei Drosseln (Dr1, Dr4) und einem Rückschlagventil (RV1) sowie einer redundanten Sekundärdichtung (D1r).
**Fig. 3b** zeigt eine erfindungsgemäße Ausführungsform für die Anbindung zwischen dem Einzelhauptzylinder und dem Vorratsbehälter (VB) mit Diagnoseventil (V_{D}) und einer redundanten Primärdichtung (D2r).
**Fig. 3c** zeigt eine erfindungsgemäße Ausführungsform für die Anbindung zwischen dem Einzelhauptzylinder und dem Vorratsbehälter (VB) mit einem Vorratsbehälterabsperrventil (17), einer Drossel (Dr4) und je einer redundanten Primär- (D2r) und Sekundärdichtung (D1r).
**Fig. 3d** zeigt eine beispielhafte Pedalkraft-Weg-Charakteristik für einen Einzelhauptzylinder mit einer weiteren Rückstellfeder (RF2) und einem Wegsimulator (WS).
**Fig. 4a** zeigt eine erfindungsgemäße Ausführungsform mit Einzelhauptzylindereinheit (SHZ) und einer zweikreisigen Doppelhubkolbenpumpe mit vier Rückschlagventilen (RV3, RV4, RV5, RV6).
**Fig. 4b** zeigt eine erfindungsgemäße Ausführungsform mit Einzelhauptzylindereinheit (SHZ) und einer zweikreisigen Doppelhubkolbenpumpe mit drei Rückschlagventilen (RV4, RV5, RV6) und einem Magnetventil (PD1).
**Fig. 4c** zeigt eine Ausführungsform mit Einzelhauptzylindereinheit (SHZ) und einer zweikreisigen Doppelhubkolbenpumpe mit vier Magnetventilen (PD1, PD2, PD3, PD4).
**Fig. 5a** zeigt eine erfindungsgemäße Ausführungsform mit einer konventionellen Tandemhauptzylindereinheit (THZ) und einer zweikreisigen Doppelhubkolbenpumpe mit vier Rückschlagventilen (RV3, RV4, RV5, RV6).
**Fig. 5b** zeigt eine erfindungsgemäße Ausführungsform mit einer Tandemhauptzylindereinheit (THZ) mit Stößel und einer zweikreisigen Doppelhubkolbenpumpe mit vier Rückschlagventilen (RV3, RV4, RV5, RV6).

### Ausführliche Beschreibung

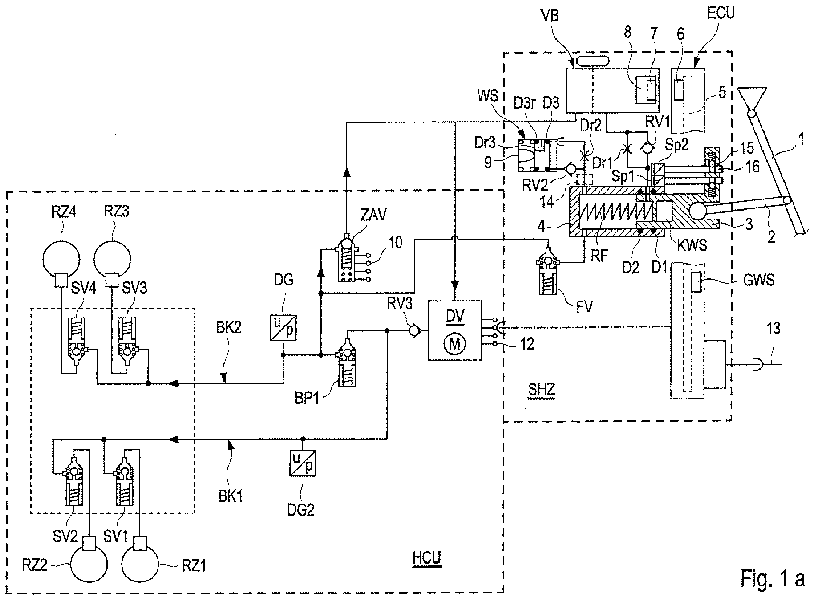

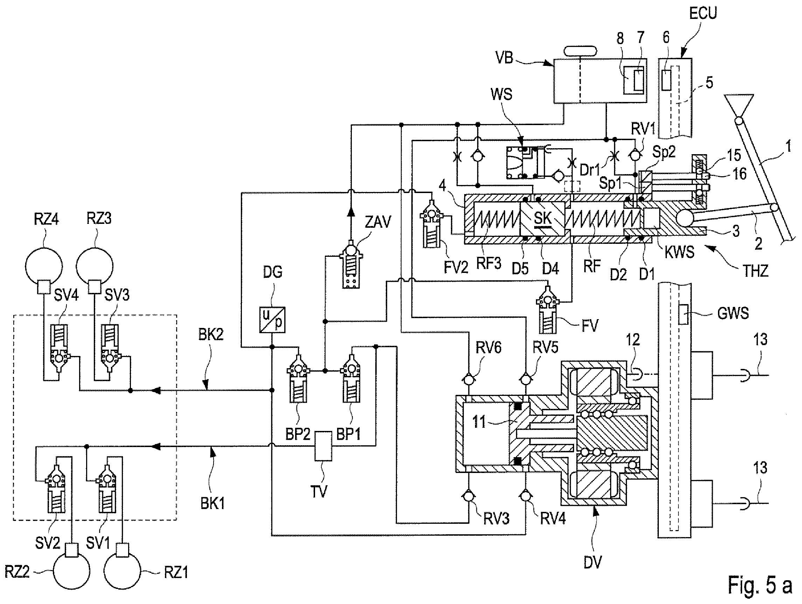

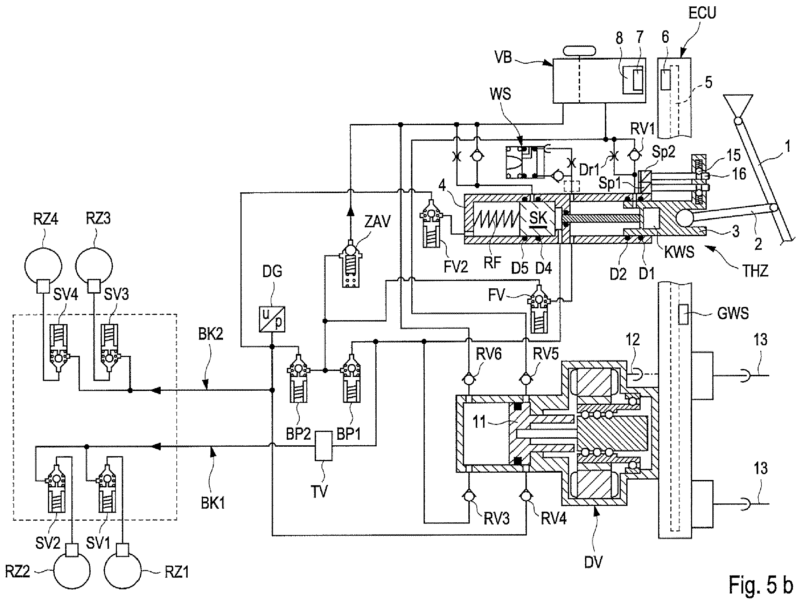

**Fig. 1a** zeigt Elemente eines hydraulischen Bremssystems mit einer Einzelhauptzylindereinheit (SHZ) mit Bremspedal (1), Einzelhauptzylinder und Vorratsbehälter (VB) einer Druckversorgungseinrichtung (DV), einer elektronischen Steuereinheit (ECU) und je Rad einer (nicht eingezeichneten) Radbremse (RB1, RB2, RB3, RB4) mit je einem Radzylinder (RZ1, RZ2, RZ3, RZ4). Druckversorgungseinrichtung (DV) und Druckbereitstellungseinheit werden hier synonym verwendet. Zwei Radzylinder (RZ1, RZ2) sind jeweils über ein Schaltventil (SV1, SV2) mit einem ersten Bremskreis (BK1) verbunden und weitere zwei Radzylinder (RZ3, RZ4) sind jeweils über ein Schaltventil (SV3, SV4) mit einem zweiten Bremskreis (BK2) verbunden. Anstelle von einem Schaltventil pro Radzylinder können auch zwei oder mehrere Schaltventile pro Radzylinder vorgesehen werden. Die Druckbereitstellungseinheit (DV) umfasst eine Pumpe und einen bürstenlosen Gleichstrommotor, welcher optional eine redundante Wicklung aufweist und/oder über 2 x 3 Phasen an die elektronische Steuereinheit (ECU) angeschlossen ist. Die Pumpe kann eine (nicht dargestellte) Plungerpumpe mit Spindelantrieb oder eine Rotationspumpe sein, wobei die Rotationspumpe wiederum als Mehrkolbenpumpe (z.B. als Dreikolbenpumpe) oder als Zahnradpumpe ausgeführt sein kann. Im Falle einer Zahnradpumpe, welche in beide Richtungen drehen kann, kann die Druckbereitstellungseinheit (DV) über ein zur Druckbereitstellungseinheit (DV) hin schließendes Rückschlagventil (RV3) an den ersten Bremskreis (BK1) angeschlossen werden. Im Falle einer Mehrkolbenpumpe, welche nur in eine Richtung Volumen fördern kann, kann die Druckbereitstellungseinheit (DV) direkt (ohne RV3) an den ersten Bremskreis (BK1) angeschlossen werden. In der Mehrkolbenpumpe können ein oder mehrere Rückschlagventile integriert sein. Im Falle einer Plungerpumpe wird ein (nicht dargestelltes) Magnetventil anstelle des Rückschlagventils RV3 benötigt. Außerdem kann die Plunger- oder Rotationspumpe mit dem Vorratsbehälter (VB) verbunden sein. Die beiden Bremskreise (BK1 und BK2) sind über ein schaltbares Bypassventil (BP1) verbunden. Der zweite Bremskreis (BK2) ist über ein schaltbares zentrales Auslassventil (ZAV) mit dem Vorratsbehälter (VB) sowie über ein schaltbares Einspeiseschaltventil (FV) mit einem hydraulischen Ausgang des Druckraums des Einzelhauptzylinders verbunden. Alternativ zum Einzelhauptzylinder kann auch ein Doppel-Hauptzylinder mit entsprechender Anbindung wie z.B. in **Fig. 5a** oder **Fig. 5b** für eine zusätzlich erhöhte Sicherheit verwendet werden. Der Druck in einem der beiden Bremskreise (z.B. BK2) kann über einen Drucksensor (z.B. DG) an diesem Bremskreis (z.B. BK2) gemessen und an die ECU übergeben werden. Optional können auch weitere Drücke in den Bremskreisen (z.B. BK1) über weitere Drucksensoren (z.B. DG2) gemessen und an die ECU übergeben werden. Die Hydraulikanordnung mit den Radzylindern (RZ1, RZ2, RZ3, RZ4), den Schaltventilen (SV1, SV2, SV3, SV4), den beiden Bremskreisen (BK1, BK2), den Drucksensoren (DG1, DG2), dem Bypassventil (BP1), dem zentralen Auslassventil (ZAV), der Druckbereitstellungseinheit (DV) und, falls vorhanden, dem Rückschlagventil (RV3) können in einer sogenannten hydraulischen Steuereinheit (HCU) zusammengefasst werden. In einer bevorzugten Ausführungsform weist die hydraulische Steuereinheit (HCU) nur genau eine Druckversorgung (DV) auf.

In der Einzelhauptzylindereinheit (SHZ) kann zusätzlich ein Wegsimulator (WS) mit oder ohne ein schaltbares Wegsimulatortrennventil (14) an einen weiteren hydraulischen Ausgang des Einzelhauptzylinders (oder an die hydraulische Leitung zwischen Einspeiseschaltventil (FV) und Einzelhauptzylinder) angebunden sein. Der Wegsimulator kann über einen Nehmerkolben, welcher z.B. durch Fußbetätigung des Bremspedals (1) gegen eine Anordnung von Rückstellfedern ausgerückt werden kann, eine bestimmte Pedalwegkraftcharakteristik auf das Bremspedal (1) übertragen. Die hydraulische Anbindung des Wegsimulators (WS) an den Einzelhauptzylinder kann, wie in **Fig. 1a** dargestellt, z.B. über eine Parallelschaltung mit einer Drossel (Dr2) und einem Rückschlagventil (RV2) oder in anderer Weise erfolgen. Die Pedalbewegung kann beim Druckaufbau über Drossel Dr2 reduziert werden und beim Entleeren des Wegsimulators (WS) kann die Drossel Dr2 über das Rückschlagventil RV2 umgangen werden.

Im regulären Fall, insbesondere bei vorhandener Stromversorgung und funktionsfähiger Druckversorgung DV, erfolgt eine Bremsung über eine Bremspedalbetätigung durch den Fahrer, wobei das Einspeiseschaltventil (FV) bei Bremspedalbetätigung geschlossen wird und geschlossen gehalten wird, solange das Bremspedal (1) eingerückt bleibt. Dadurch wird das Pedalsystem von der hydraulischen Steuereinheit (HCU) hydraulisch abgekoppelt. Die Kopplung erfolgt stattdessen als "brake-by-wire" über die redundant ausgeführten Pedalwegsensoren, die ECU und die Druckbereitstellungseinheit DV, welche bei geöffneten Schaltventilen (SV1, SV2, SV3, SV4), geöffnetem Bypassventil (BP1) und geschlossenem zentralen Auslassventil (ZAV) Bremsflüssigkeitsvolumen aus dem Vorratsbehälter (VB) in die Radzylinder (RZ1, RZ2, RZ3, RZ4) beider Bremskreise (BK1, BK2) fördern und dadurch Bremsdruck aufbauen kann. In Abhängigkeit der gewünschten Bremskraft und weiteren Randbedingungen kann das Bypassventil (BP1) während einer regulären Bremsung auch geschlossen sein, wenn nur mit den Radzylindern (RZ1, RZ2) im ersten Bremskreis (BK1) gebremst werden soll. Über den mindestens einen Drucksensor (DG) in einem der Bremskreise (BK1, BK2), und/oder Pulsweitenmodulation der Schaltventile (SV1, SV2, SV3, SV4) und/oder des Bypass-Ventils (BP1), kann in Abhängigkeit von dem Pedalweg ein Zieldruck eingeregelt werden. Über den Wegsimulator (WS) und die Rückstellfeder (RF) im Einzelhauptzylinder erhält der Fahrer eine bestimmte Pedalwegkraftcharakteristik, welche bevorzugt immer möglichst gleich und unabhängig von den Bremsdrücken in den Bremskreisen (BK1, BK2) sein kann. Insbesondere wirkt die Kombination aus Wegsimulator (WS) und Rückstellfeder (RF) in dem "brake-by-wire" System einem Durchfall des Bremspedals entgegen und bringt das Pedal nach der Fußbetätigung wieder in eine definierte Ausgangsposition zurück. Insbesondere bei elektrischen Fahrzeugen oder Hybridfahrzeugen kann so die Rückgewinnung von Bremsenergie (Rekuperation) in den elektrischen Traktionsmotoren vom Bremspedal (1) entkoppelt werden. Insbesondere wird auch im nicht regulären Fall bei z.B. Ausfall eines Bremskreises die Pedalwegkraftcharakteristik nicht beeinflusst.

Bei Rücknahme der Bremspedalkraft kann das zentrale Auslassventil (ZAV) geöffnet werden, insbesondere bei Verwendung einer Rotationspumpe. Außerdem werden die Schaltventile (SV1, SV2, SV3, SV4) und/oder die Bypassventile (BP1, BP2) ganz oder in Abhängigkeit des gewünschten Druckabbaugradienten über Pulsweitenmodulation (PWM) oder kurze Stopps (z.B. nach einer Zeit Δt oder nach einem Differenzdruck Δp) oder anderweitig geöffnet. Dadurch kann das Bremsflüssigkeitsvolumen in den Vorratsbehälter (VB) zurückgeführt und Bremsdruck abgebaut werden. Gelangt nach erfolgter Fußbetätigung des Bremspedals (1) der Kolben (3) des Einzelhauptzylinders wieder in die definierte Ausgangsposition kann der Austausch von Bremsflüssigkeit zwischen dem Druckraum des Einzelhauptzylinders und dem Vorratsbehälter (VB) durch z.B. radiale Schnüffelöffnungen im Kolben (3) und im Einzelhauptzylinder sowie über eine hydraulische Anbindung erfolgen. Diese hydraulische Anbindung kann wie in **Fig. 1a** durch eine Parallelschaltung von einer Drossel (Dr1) und einem Rückschlagventil (RV1) oder in anderer Weise erfolgen. Die Abdichtung des Druckraums im Einzelhauptzylinder kann über eine Primärdichtung (D2) und eine Sekundärdichtung (D1) sowie weitere nicht dargestellte redundante Dichtungen realisiert werden, wobei insbesondere die Primärdichtung (D2) im Einzelhauptzylinder oder am Kolben (3) des Einzelhauptzylinders angebracht sein kann.

Im regulären Fall können je Rad individuelle Bremsdrücke für Fahrdynamikeingriffe wie z.B. ABS oder ESP eingeregelt werden. Die Regelfunktion für z.B. ABS ist folgende: Meldet der Regler beim Druckaufbau P_{auf}, dass ein Bremszylinder (z.B. RZ1) eines Rads beispielsweise das Kriterium von zu viel Bremsdruck erfüllt, so kann zur Beobachtung des Rades der Druckaufbau P_{auf} gestoppt werden oder (gegebenenfalls nach einer solchen Beobachtungszeit) der Bremsdruck durch Druckabbau P_{ab} reduziert werden. Da das Einspeiseschaltventil (FV) dabei geschlossen bleibt und die Pumpe je nach Ausführung in der Druckbereitstellungseinheit (DV) kein Volumen aus den Bremskreisen aufnehmen kann, stellt die Öffnung des zentralen Auslassventils (ZAV) die einzige Möglichkeit zum Druckabbau P_{ab} in einer möglichen Ausgestaltung dar. Bei offenem zentralem Auslassventil (ZAV) können dann unterschiedliche Druckabbaugradienten vorzugsweise durch die PWM-Ansteuerung des zugehörigen Schaltventils (z.B. SV1) eingeregelt werden. Wird der Druckabbau P_{ab} vom Regler gestoppt, wird das zentrale Auslassventil (ZAV) wieder geschlossen. Es können auch zwei, drei oder vier Radzylinder gleichzeitig und radindividuell im Druckabbau P_{ab} gesteuert werden. Ebenso kann der Druckaufbau P_{auf} je nach Bedarf in einem Radzylinder, in zwei, drei oder vier Radzylindern gleichzeitig und radindividuell gesteuert werden.

Bei einem im teilautomatisierten Fahren (Stufe 2) üblichen Eingriff durch ein Fahrerassistenzsystem wie z.B. bei einem Abstandsregeltempomat oder Stauassistent kann eine Bremsung auch ohne Pedalbetätigung durch den Fahrer über die Druckbereitstellungseinheit (DV) durchgeführt werden, wobei das Bremspedal (1) durch das dann geschlossene Einspeiseschaltventil (FV) von einem solchen Eingriff hydraulisch entkoppelt ist.

In Anlehnung an die sogenannten konventionellen Drei-Box-Systeme (Bremssystem mit ABS/ESP-Funktionalität, Vakuumbremskraftverstärker und elektrischer oder mechanischer Vakuumpumpe) sowie an die sogenannten konventionellen Zwei-Box-Systeme (Bremssystem mit ABS/ESP-Funktionalität und elektromotorischer Bremskraftverstärkungseinheit) kann das erfindungsgemäße "brake-by-wire"-Bremssystem mit Wegsimulator (WS), elektromotorischer Druckbereitstellungseinheit (DV) und ABS/ESP-Funktionalität als sogenanntes Ein-Box-System bezeichnet werden. Durch den hohen Integrationsgrad eines solchen Ein-Box-Systems können der Bauraum, das Gewicht und die Kosten von der gesamten Baueinheit reduziert und zusätzlich Einbau und Logistik optimiert werden.

Die Ventile FV, BP1, SV1, SV2, SV3, SV4 können als stromlos offene Magnetventile ausgeführt sein, während die Ventile ZAV und, falls vorhanden, das Wegsimulatortrennventil (14) bevorzugt stromlos geschlossene Magnetventile sind. Zudem sind die Schaltventile (SV1, SV2, SV3, SV4) bevorzugt über deren Ausgangsseite mit den jeweiligen Radzylindern (RZ1, RZ2, RZ3, RZ4) verbunden, so dass jedes Schaltventil (SV1, SV2, SV3, SV4) im Fehlerfall, z.B. bei Ausfall seines elektrischen Anschlusses, durch den Druck in dem jeweiligen Radzylinder (RZ1, RZ2, RZ3, RZ4) selbst öffnet. Durch diese Ventilkonfiguration kann insbesondere sichergestellt werden, dass bei fehlender Stromversorgung das Bremspedal (1) über das offene Einspeiseschaltventil (FV) hydraulisch mit den Radzylindern (RZ1, RZ2, RZ3, RZ4) gekoppelt werden kann und Bremsdruck aufgebaut werden kann. Falls das stromlos geschlossene Wegsimulatortrennventil (14) vorhanden ist, kann zudem der Wegsimulator (WS) vom Bremspedal (1) entkoppelt werden, wodurch z.B. ca. 40% Pedalweg eingespart werden kann.

Alle Magnetventile, insbesondere das ZAV, können jeweils als redundantes Ventil und/oder mit redundanter Spule und/oder mit redundanter Ansteuerung ausgeführt sein, wodurch die Wahrscheinlichkeit eines Ventilausfalls reduziert werden kann. Bei einem Einzelausfall mit einer Wahrscheinlichkeit von z.B. 1e-6 pro Jahr, kann durch eine Redundanz mit derselben Ausfallwahrscheinlichkeit die Ausfallwahrscheinlichkeit pro Jahr auf 1e-6 x 1e-6 = 1e-12 gesenkt werden.

Auch bei vorhandener Stromversorgung und einem Ausfall der Druckbereitstellungseinheit (DV) können die Ventile FV, BP1, SV1, SV2, SV3, SV4 geöffnet und die Ventile ZAV und, falls vorhanden, das Wegsimulatortrennventil (14) geschlossen werden, so dass über die Bremspedalbetätigung Bremsdruck aufgebaut werden kann. Alternativ kann das Bypassventil (BP1) geschlossen werden und über Fußbetätigung des Bremspedals (1) noch ausreichend Bremsdruck im zweiten Bremskreis (BK2) aufgebaut werden. Der Ausfall der elektrischen Ansteuerung der Druckbereitstellungseinheit (DV) kann vor allem in den bevorzugten Ausführungen mit einer (einfachen) Mehrkolben- oder Zahnradpumpe sowie über redundante Wicklungen mit 2 x 3 Phasenansteuerung als sehr unwahrscheinlich eingestuft werden. Da zudem ein Ausfall der Stromversorgung unwahrscheinlich ist, kann auf das Wegsimulatortrennventil (14) verzichtet werden.

Erfindungsgemäß kann das Bremssystem verschiedene Sensoren, insbesondere Drucksensoren (DG, DG2), redundante Pedalwegsensoren (Sp1 und Sp2) zur Ermittlung des Pedalwegs, einen Kraftwegsensor (KWS) im Kolben des Einzelhauptzylinders zur Ermittlung einer Kraft-Pedalweg-Charakteristik, ein Füllstandssensorelement (6) zur Ermittlung des Füllstands der Bremsflüssigkeit im Vorratsbehälter (VB), einen Gierwinkelsensor (GWS) für z.B. ESP-Eingriffe oder weitere Sensoren (z.B. einen Temperaturfühler) aufweisen, deren Sensorwerte an die elektronische Steuereinheit (ECU) übermittelt werden können. Alternativ oder zusätzlich zum Kraftwegsensor (KWS) kann ein (nicht eingezeichneter) Drucksensor in den Einzelhauptzylinder integriert werden, welcher den Druck im Druckraum erfassen und an die ECU übermitteln kann. Zudem können auch alle Magnetventile, insbesondere die Ventile SV1, SV2, SV3, SV4, BP1, ZAV, FV, 14, vorzugsweise über eine redundante elektronische Ansteuerung oder über eine redundante Spule von der elektronischen Steuereinheit (ECU) geschaltet werden. Die elektronische Steuereinheit (ECU) kann bei Ein-Box-Geräten mit ABS/ESP an der hydraulischen Steuereinheit (HCU) angebracht werden und vorzugsweise über einen Stecker (13) an das Bordnetz des Fahrzeugs angeschlossen werden, wobei die Buskommunikation z.B. über FlexRay oder CAN oder in anderer Weise realisiert werden kann.

Die redundanten Pedalwegsensoren (Sp1 und Sp2) können in unterschiedlicher Weise realisiert werden. In Fig. 1a werden von einem Fortsatz des Einzelhauptzylinderkolbens (3) zwei Sensorstangen bewegt, welche auf die redundanten Pedalwegsensoren (Sp1 und Sp2) wirken. Um die Stangen vor dem Blockieren zu schützen können in einem Fortsatz des Kolbens (3) Rastelemente untergebracht werden. Die redundanten Pedalwegsensoren (Sp1 und Sp2) können auch mit zwei Kolben und einer Feder zwischen beiden Kolben gekoppelt werden. Dies hat den Vorteil, dass man damit eine Kraftwegmessung realisieren kann mit zusätzlichen Vorteilen in der Fehleranalyse z.B. bezüglich eines klemmenden Kolbens (3) siehe auch DE102010050132.

Im Folgenden werden weitere Fehlerfälle, deren Folgen und Erkennung durch Diagnosen behandelt.

Ein Bremskraftverlust verursacht durch eine undichte Dichtung in einem der Radzylinder (RZ1, RZ2, RZ3, RZ4) kann durch einen Abgleich mit einer vorbestimmten Druck-Volumen-Charakteristik für den Druckaufbau P_{auf}, welche von verschiedenen Randbedingungen wie z.B. Ventilstellungen, Temperatur, Entlüftung des Bremssystems, Lüftspiel der Radbremsen (RB1, RB2, RB3, RB4) etc. abhängen kann, über die zusätzliche Verlustvolumenaufnahme bzw. die zusätzliche Volumenförderung der Druckbereitstellungseinheit (DV) erkannt werden. Über die folgende Diagnose kann der Radzylinder, in welchem der Bremskraftverlust auftritt, lokalisiert werden: Nach erfolgtem Druckaufbau P_{auf}, sind alle Schaltventile (SV1, SV2, SV3, SV4) offen und die Druckbereitstellungseinheit (DV) wird bei vorhandenem Restdruck in den Bremskreisen (BK1, BK2) nicht weiter bestromt. Nach Schließen des Bypassventils (BP1) kann der durch den Drucksensor (DG) im zweiten Bremskreis (BK2) gemessene Druck untersucht werden. Sinkt der Druck, so müssen Radzylinder RZ3 und/oder RZ4 undicht sein. Durch Schließen von z.B. Schaltventil SV3 kann nun bei fallendem Druck eine Undichtigkeit im Radzylinder RZ4 oder bei konstantem Druck eine Undichtigkeit im Radzylinder RZ3 erkannt werden. Bleibt der Druck dagegen nach Schließen des Bypassventils (BP1) konstant, können die Radzylinder RZ3 und RZ4 als dicht erkannt werden. In diesem Fall wird das Bypassventil (BP1) geöffnet und die Schaltventile SV1, SV3 und SV4 geschlossen. Sinkt der Druck, kann die Undichtigkeit im Radzylinder RZ2 erkannt werden, während bei konstantem Druck die Undichtigkeit im Radzylinder RZ1 erkannt werden kann. Nach Lokalisierung des Radzylinders (z.B. RZ1) mit Bremskraftverlust kann das zugehörige Schaltventil (z.B. SV1) bis zum Austausch der Einheit im Service vor jeder Bremsung geschlossen werden, so dass weiterhin über zwei oder drei Radzylinder (z.B. RZ2, RZ3, RZ4) mit reduzierter aber für die Stufe zwei des autonomen Fahrens ausreichender Bremskraft verzögert werden kann. Wird in einem Radzylinder wie oben beschrieben eine geringe Leckage festgestellt, kann alternativ zur Stilllegung des Radzylinders die Leckage durch Nachförderung über die Druckbereitstellungseinheit (DV) ausgeglichen werden.

Nach Schließen aller Schaltventile SV1, SV2, SV3, SV4 kann vorzugsweise im Stillstand mit oder ohne Volumenförderung über die Druckbereitstellungseinheit (DV), mit abwechselnd geschlossenen bzw. geöffneten Ventilen ZAV und FV, die Dichtheit des zentralen Auslassventils ZAV und des Einspeiseschaltventils FV geprüft werden. Falls eine mögliche Undichtigkeit beispielsweise über eine Druckschwingung von der Druckbereitstellungseinheit (DV) und durch ein Zusammenspiel von Füllstandssensorelement (6) im Vorratsbehälter (VB) und Pedalbewegung im ZAV oder FV lokalisiert werden kann, können die folgenden Maßnahmen unterschieden werden: Im Falle eines z.B. durch einen Schmutzpartikel blockierten, nicht mehr dichtenden zentralen Auslassventils (ZAV) oder wenn das zentrale Auslassventil (ZAV) nach Ausfall der elektrischen Ansteuerung nicht mehr geschlossen werden kann, kann das Bypassventil (BP1) geschlossen werden, wobei dann über die Druckbereitstellungseinheit (DV) zumindest im ersten Bremskreis noch ausreichend Bremsdruck aufgebaut werden kann. Andererseits, im Falle eines z.B. durch einen Schmutzpartikel blockierten, nicht mehr dichtenden Einspeiseschaltventils (FV), können das Bypassventil (BP1), die Schaltventile SV3 und SV4 im zweiten Bremskreis (BK2) sowie das zentrale Auslassventil (ZAV) geschlossen werden, wodurch die durch die Undichtigkeit des Einspeiseschaltventils (FV) prinzipiell mögliche Verstimmung der Pedalcharakteristik im Einzelhauptzylinder verhindert werden kann und weiterhin über die Druckbereitstellungseinheit (DV) im ersten Bremskreis (BK1) noch ausreichend Bremsdruck aufgebaut werden kann. Im Falle, dass die Lokalisierung der Undichtigkeit bei ZAV oder FV nicht möglich ist, kann wie im Falle einer Undichtigkeit bei FV verfahren werden. Ist außerdem ein solcher Leckstrom gering, kann dieser wie oben erwähnt durch die Volumenförderung der Druckbereitstellungseinheit (DV) ausgeglichen werden.

Fällt das zentrale Auslassventil (ZAV) in dem Sinne aus, dass es nicht mehr geöffnet werden kann, kann Bremsdruck über Öffnung des Einspeiseschaltventils (FV) über den Einzelhauptzylinder und den Vorratsbehälter (VB) abgebaut werden. Im Falle eines alternativ eingesetzten Doppel-Hauptzylinders, dessen weiterer Druckraum wie in **Fig. 5a** und **Fig. 5b** über ein weiteres Einspeiseschaltventil (FV2) mit der hydraulischen Steuereinheit verbunden ist, können beide Einspeiseschaltventile (FV, FV2) zum Druckabbau P_{ab} geöffnet werden.

Fällt eines (z.B. SV3) der Schaltventile (SV3, SV4) im zweiten Bremskreis in dem Sinne aus, dass es z.B. aufgrund eines Schmutzpartikels nicht mehr geschlossen werden kann, kann das Bypassventil (BP1) geschlossen werden und über die Druckbereitstellungseinheit (DV) im ersten Bremskreis (BK1) noch ausreichend Bremskraft, insbesondere für die Stufe zwei beim autonomen Fahren, aufgebaut werden. Besonders vorteilhaft kann bei Ausfall eines der beiden Bremskreise (BK1, BK2) die sogenannte diagonale Aufteilung der Bremskraft auf die vier Räder des Fahrzeugs sein, welche im Vergleich zur Aufteilung der Bremskreise (BK1, BK2) auf die Vorder- bzw. Hinterachse des Fahrzeugs zu einer höheren Abbremsung führen kann (z.B. ca. 50% bei der diagonalen Aufteilung gegenüber ca. 30% bei Vorder-/Hinterachsenaufteilung, wenn der Vorderantriebkreis ausfällt). Diagonale Aufteilung der Bremskraft bedeutet, dass einem Bremskreis eine Vorderradbremse einer Seite des Fahrzeugs und die Hinterradbremse der anderen Seite des Fahrzeugs zugeordnet sind. Dem zweiten Bremskreis sind entsprechend die Radbremsen der anderen Diagonalen zugeordnet.

Fällt eines (z.B. SV1) der Schaltventile (SV1, SV2) im ersten Bremskreis in dem Sinne aus, dass es z.B. aufgrund eines Schmutzpartikels nicht mehr geschlossen werden kann, kann das Bypassventil (BP1) geschlossen und das Einspeiseschaltventil (FV) geöffnet werden, so dass über Fußbetätigung des Bremspedals (1) noch ausreichend Bremsdruck im zweiten Bremskreis (BK2) aufgebaut werden kann. Falls vorhanden, kann zusätzlich das Wegsimulatortrennventil (14) geschlossen werden, wodurch z.B. ca. 40% Pedalweg eingespart werden kann.

Fällt das Einspeiseschaltventil (FV) in dem Sinne aus, dass es z.B. aufgrund eines Schmutzpartikels nicht mehr geschlossen werden kann, kann der zweite Bremskreis durch Schließen der Schaltventile SV3 und SV4, des zentralen Auslassventils (ZAV), sowie des Bypassventils (BP1) abgekoppelt werden. Da dadurch eine Verstimmung der Pedalwegcharakteristik im Einzelhauptzylinder verhindert werden kann, kann weiterhin über die Druckbereitstellungseinheit (DV) noch ausreichend Bremsdruck im ersten Bremskreis (BK1) aufgebaut werden. Bei einer Notbremsung kann weiterhin die Bremskraft in den Radbremsen (RB1, RB2, RB3, RB4) nach Öffnung der Schaltventile (SV3, SV4) im zweiten Bremskreis (BK2) durch Fußbetätigung des Bremspedals (1) weiter erhöht werden. Ist der Leckfluss im Einspeiseschaltventil (FV) klein und es tritt während der Notbremsung ein Blockieren eines der Radbremsen (RB1, RB2, RB3, RB4) ein, so kann über das zentrale Auslassventil (ZAV) und die Druckversorgungseinheit (DV) eine ABS-Regelung erfolgen.

Fällt ein Drucksensor (z.B. DG) in einem der Bremskreise (BK1, BK2) aus, kann, falls vorhanden, auf einen weiteren Drucksensor (z.B. DG2) in einem der Bremskreise (BK1, BK2) zurückgegriffen werden. Im Falle, dass nur ein Drucksensor (DG) im Bremssystem vorhanden ist, kann der Druck in den Bremskreisen (BK1, BK2) auch über den elektrischen Strom im Motor der Druckbereitstellungseinheit (DV) gemäß vorbestimmter, in der ECU gespeicherter Strom-Druck-Relationen (z.B. Kennfelder) eingeregelt werden, wobei diese Strom-Druck-Relationen Abhängigkeiten verschiedener Randbedingungen z.B. Druckaufbau P_{auf}, oder Druckabbau P_{ab}, Magnetventilstellungen, Temperatur, etc. einschließen können.

Fällt die Primärdichtung (D2) in einem Druckraum des Hauptzylinders aus, d.h. ist die Primärdichtung (D2) undicht, ist eine Leckage der Bremsflüssigkeit im Hauptzylinder möglich, welche den Pedalweg unkontrollierbar beeinflussen (hier: vergrößern) und über "brake-by-wire" zu viel Bremsdruck und damit unerwünscht harte Bremsungen verursachen kann. Im Folgenden sei der Hauptzylinder ein Einzelhauptzylinder, wobei die Verwendung eines Tandemhauptzylinders ebenfalls möglich ist. Zur Vermeidung eines möglichen Totalausfalls des Hauptzylinders kann eine Anbindung des Einzelhauptzylinders an den Vorratsbehälter (VB) wie z.B. in Fig. 1a über eine Parallelschaltung von einem zum Vorratsbehälter hin schließenden Rückschlagventil (RV1) und einer Drossel (Dr1) ausgeführt werden. Bei einer undichten Primärdichtung (D2) und bei einer dichten Sekundärdichtung (D1) wird der Leckstrom vom Rückschlagventil (RV1) gesperrt und von der Drossel (Dr1) derart gedrosselt, dass nur eine unwesentlich kleine Kolben- bzw. Pedalbewegung resultiert, welche die "brake-by-wire"-Bremsung nur unwesentlich stört. Die Drossel (Dr1) kann z.B. so ausgelegt werden, dass die durch die Leckage verursachte Pedalbewegung ca. 0,2mm/s beträgt. Bei einer mittleren Bremszeit von ca. 3s um ein Fahrzeug bei 100km/h mit 1g zu verzögern kann es somit zu einer Verstimmung des Pedalwegs von 0.6mm kommen, was im Vergleich zum gesamten Pedalhub klein und vernachlässigbar ist. Das Rückschlagventil (RV1) ermöglicht eine schnelle Befüllung des Bremssystems mit Bremsflüssigkeit sowie eine schnelle Entlüftung über geöffnete Entlüfterschrauben an den Radzylindern (RZ1, RZ2, RZ3, RZ4). Die Drossel (Dr1) ermöglicht auch einen Volumenausgleich bei Temperaturänderungen.

Ein kritischer Doppelfehler bestehend aus einer undichten Primärdichtung (D2) und dem zusätzlich schlafenden Einzelfehler einer undichten Sekundärdichtung (D1), bei dem die Leckage nicht mehr durch die Drossel (Dr1) gedrosselt werden kann, kann durch weitere (nicht eingezeichnete) redundante Primär- und/oder Sekundärdichtungen abgefangen werden. Erfindungsgemäß kann wie in Fig. 1a die Dichtheit der Sekundärdichtung (D1) regelmäßig (z.B. bei jedem Parkstopp) durch eine Diagnose überwacht werden. Im Falle ohne Wegsimulator (WS) oder im Falle eines durch das Wegsimulatortrennventil (14) schaltbar verbundenen Wegsimulators (WS), kann die Undichtigkeit dabei eindeutig der Sekundärdichtung (D1) zugeordnet werden. Das Verfahren in einem dieser Fälle kann beispielsweise wie folgt realisiert werden: Gelangt durch entsprechende Ventilschaltung nach dem Abstellen des Fahrzeugs der Restdruck im Bremssystem über das offene Einspeiseschaltventil (FV) in den Einzelhauptzylinder, kann während einer Zeit von z.B. 10s anhand der vom Drucksensor (DG) erfassten Druckänderung die Dichtheit des gesamten Bremssystems überprüft werden, wobei ein festgestellter Druckabfall auf eine Undichtigkeit hinweisen kann. Wird eine solche Undichtigkeit festgestellt, kann nach Schließen der Schaltventile (SV1, SV2, SV3, SV4) und, falls vorhanden, des Wegsimulatortrennventils (14) der Einzelhauptzylinder über die Druckbereitstellungseinheit (DV) mit einem konstanten Druck von z.B. 20 bar für eine bestimmte Zeit beaufschlagt werden. Hierbei kann z.B. über die vom Rotorlagesensor erfasste Winkeländerung im Motor der Druckbereitstellungseinheit (DV) die Fördermenge ermittelt werden. Ist diese größer als die bekannte Fördermenge der Drossel (Dr1) bei z.B. 20 bar, so kann die Sekundärdichtung (D1) als undicht bewertet werden. Ein Doppelfehler mit undichter Primär- (D2) und Sekundärdichtung (D1) kann somit nur in dem unwahrscheinlichen Fall auftreten, wenn beide Dichtungen (D1, D2) während der Fahrt gleichzeitig ausfallen. Im Falle eines Wegsimulators (WS) ohne Wegsimulatortrennventil (14) kann eine detektierte Undichtigkeit analog der eben beschriebenen Diagnose unter Umständen nicht eindeutig der Sekundärdichtung (D1) des Einzelhauptzylinders zugeordnet werden, da die Undichtigkeit auch in einer undichten Wegsimulatordichtung (D3) des Wegsimulators (WS) begründet sein kann, welche durch die Drosselung durch die undichte Wegsimulatordichtung (D3) sowie über eine weitere Drossel (Dr3) zwischen der Wegsimulatordichtung (D3) und einer weiteren redundanten Dichtung (D3r) des Wegsimulators (WS) ebenfalls zu einem Leckfluss über eine nicht eingezeichnete Verbindung in den Vorratsbehälter (VB) führen kann. In diesem Fall können durch unterschiedliche Auslegungen der hydraulischen Widerstände für die Drosseln Dr1 und Dr3 bei Undichtigkeit von D1 oder D3 in gewissem Maße unterschiedliche Leckströme durch Dr1 bzw. Dr3 eingestellt werden, wodurch die eben beschriebene Diagnose dann die Undichtigkeit bei D1 oder D3 lokalisieren kann. Andererseits kann auch ohne Lokalisierung der Undichtigkeit bei D1 oder D3 ein schlafender Fehler von D1 oder D3 durch den gleichzeitigen Austausch beider Dichtungen (D1, D3) vermieden und die Sicherheit des Bremssystems gewährleistet werden. Ein zusätzlicher Fehler der redundanten Primärdichtung (D3r) kann als unwahrscheinlicher Doppelfehler eingestuft werden.

Der Vorratsbehälter (VB) kann zwei zueinander redundante Fluidkammern aufweisen. Der Vorratsbehälter (VB) hat in mindestens einer Fluidkammer einen Schwimmer (8) mit einem Sensortarget (7), welche zusammen mit einem Füllstandssensorelement (6) auf der PCB (5) der an dem Vorratsbehälter (VB) anliegenden elektronischen Steuereinheit (ECU) den Füllstand der Bremsflüssigkeit im Vorratsbehälter (VB) nahezu stufenlos messen kann. Dadurch können ebenfalls kleine Leckagen redundant im Bremskreis erfasst werden, z.B. Undichtigkeiten von D1 oder von einem der Radzylinder RZ1-RZ4. Die Integration des Füllstandssensorelements (6) in die elektronische Steuereinheit (ECU) kann Kosten reduzieren.

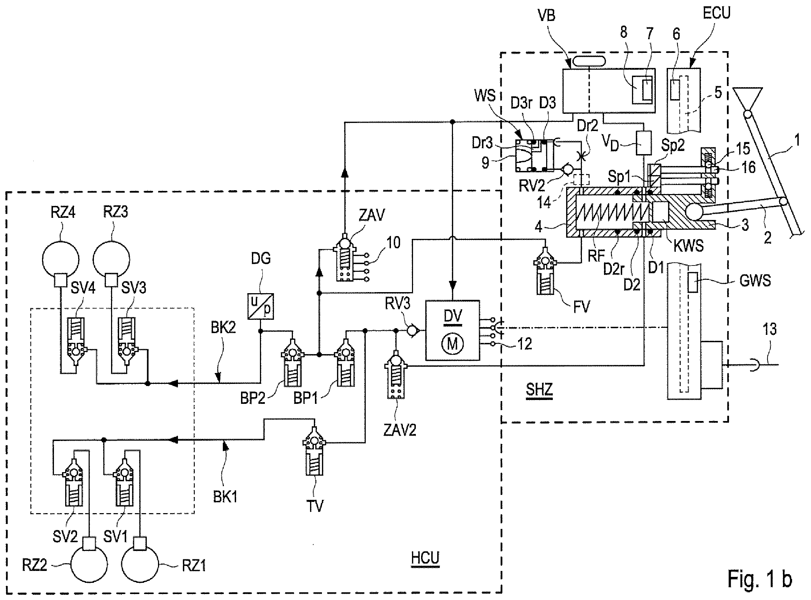

**Fig. 1b** zeigt eine weitere Ausführungsform eines Bremssystems, welches im Vergleich zu **Fig. 1a** ein weiteres Bypassventil (BP2), ein Trennventil (TV) und ein weiteres (zentrales) Auslassventil (ZAV2) aufweist. Dadurch kann die Sicherheit in dem Bremssystem insbesondere im Hinblick auf Doppelfehler erhöht werden.

Das weitere Bypassventil (BP2) kann derart in den zweiten Bremskreis (BK2) eingesetzt werden, dass der zweite Bremskreis (BK2) mit den Radzylindern RZ3 und RZ4 bei einem Fehlerfall im zweiten Bremskreis (BK2) vom restlichen Bremssystem abgekoppelt werden kann. Wie in **Fig. 1b** gezeigt, kann beispielsweise das zweite Bypassventil (BP2) in die hydraulische Leitung zwischen dem ersten Bypassventil (BP1) und dem Drucksensor (DG) im zweiten Bremskreis (BK2) eingesetzt werden, wobei das zentrale Auslassventil (ZAV) dann über das zweite Bypassventil (BP2) mit dem zweiten Bremskreis (BK2) verbunden werden kann. Die Kombination aus beiden Bypassventilen (BP1, BP2) kann als Sicherheitsgate (SIG) bezeichnet werden gegebenenfalls auch in einer möglichen Erweiterung durch das Trennventil (TV).

Das Trennventil (TV) kann derart in den ersten Bremskreis (BK1) eingesetzt werden, dass der erste Bremskreis (BK1) mit den Radzylindern RZ1 und RZ2 bei einem Fehlerfall (z.B. Doppelfehler RZ und SV) im ersten Bremskreis (BK1) vom restlichen Bremssystem abgekoppelt werden kann. Wie in **Fig. 1b** gezeigt, kann beispielsweise das Trennventil (TV) in die hydraulische Leitung zwischen der Druckbereitstellungseinheit (DV) bzw., falls vorhanden, dem Rückschlagventil (RV3) bzw. einem Magnetventil an der Druckbereitstellungseinheit (DV) und den Schaltventilen (SV1, SV2) des ersten Bremskreises (BK1) eingesetzt werden. Weiterhin kann ein nicht eingezeichneter, redundanter Drucksensor (DG2) an den ersten Bremskreis (BK1) gekoppelt werden.

Das weitere zentrale Auslassventil (ZAV2) kann derart in das Bremssystem eingesetzt werden, dass redundant zum zentralen Auslassventil (ZAV) Druck im Bremssystem abgebaut werden kann. Wie in **Fig. 1b** dargestellt, kann es beispielsweise mit der hydraulischen Leitung zwischen dem Trennventil (TV) und der Druckbereitstellungseinheit (DV) oder, falls vorhanden, dem Rückschlagventil (RV3) bzw. einem Magnetventil an der Druckbereitstellungseinheit (DV) verbunden sein. Aus Sicherheitsgründen sollten ZAV und ZAV2 mit getrennten Teilen des Vorratsbehälters (VB) verbunden werden. ZAV2 kann beispielsweise wie in **Fig. 1b** dargestellt auch über eine weitere Öffnung im Hauptzylinder und eine ringförmige Schnüffelöffnung im Kolben (3) mit dem Vorratsbehälter (VB) verbunden werden.

Das zweite Bypassventil (BP2) und das Trennventil (TV) können als stromlos offene Magnetventile ausgeführt sein, während das weitere zentrale Auslassventil (ZAV2) als stromlos geschlossenes Magnetventil ausgeführt sein kann. Das zweite Bypassventil (BP2) und das Trennventil (TV) können zudem jeweils mit ihrer Ausgangsseite derart an den zweiten Bremskreis (BK2) bzw. an den ersten Bremskreis (BK1) angeschlossen werden, dass sie bei einem Ausfall der Ventilansteuerung (z.B. im stromlosen Fall) durch den Restdruck in den Bremskreisen (BK1, BK2) geöffnet werden können. Dadurch können wie bei dem Bremssystem in **Fig. 1a** auch im stromlosen Fall Bremsungen über die Fußbetätigung des Bremspedals (1) erfolgen.

Fällt eines (z.B. ZAV) der beiden (zentralen) Auslassventile (ZAV, ZAV2) in dem Sinne aus, dass es nicht mehr geöffnet werden kann, kann der Druckabbau P_{ab} über das andere zentrale Auslassventil (ZAV2) erfolgen. Anders als in **Fig. 1a** muss dabei nicht das Einspeiseschaltventil (FV) geöffnet werden, wodurch die "brake-by-wire" Funktionalität aufrecht gehalten werden kann und insbesondere eine Verstimmung der Pedalwegcharakteristik und damit eine Beeinflussung der Pedalbewegung vermieden werden kann.

In einer erfindungsgemäßen Ausführung hat das weitere zentrale Auslassventil (ZAV2) zudem den Vorteil, dass der Druckabbau P_{ab} während eines Fahrdynamikeingriffs (z.B. ABS) in je zwei Radzylindern (RZ1, RZ2 bzw. RZ3, RZ4) pro Bremskreis (BK1, BK2) unabhängig eingeregelt werden kann.

Durch das zweite Bypassventil (BP2) kann die Sicherheit erhöht werden, wenn das Einspeiseschaltventil (FV) (z.B. aufgrund eines Schmutzpartikels oder eines Fehlers im elektrischen Anschluss) nicht mehr geschlossen werden kann. In einem solchen Fall kann durch das Schließen beider Bypassventile (BP1, BP2) der Einzelhauptzylinder vom Bremssystem abgekoppelt und über die Druckbereitstellungseinheit (DV) im ersten Bremskreis (BK1) noch ausreichend Bremsdruck aufgebaut werden. Der Druckabbau P_{ab} kann dabei beispielsweise über das weitere (zentrale) Auslassventil ZAV2 erfolgen. Bei einer Notbremsung kann zudem die Bremskraft nach der Öffnung des zweiten Bypassventils (BP2) durch Fußbetätigung des Bremspedals (1) im zweiten Bremskreis (BK2) weiter erhöht werden. Dadurch kann beispielsweise eine Bremswirkung von ca. 75% der vollen regulären Bremswirkung erreicht werden. Im Falle, dass die Leckage durch das nicht mehr schließende Einspeiseschaltventil (FV) gering ist, kann z.B. noch Druckabbau P_{ab} (und Druckaufbau P_{auf}) für einen ABS-Eingriff über die Schaltventile (SV3, SV4) und eines der zentralen Auslassventile (ZAV) erfolgen.

Der Einzelhauptzylinder kann zusätzlich zu der Primärdichtung (D2) und der Sekundärdichtung (D1) weitere redundante Primär- und/oder Sekundärdichtungen, insbesondere eine in **Fig. 1b** dargestellte redundante Primärdichtung (D2r) aufweisen.

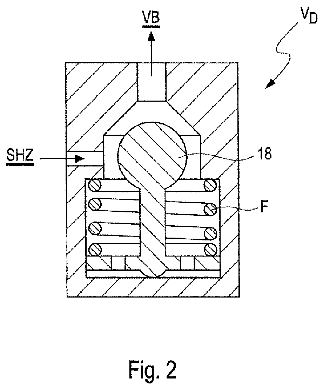

Die Schnüffelöffnung im Einzelhauptzylinder zwischen der Primärdichtung (D2) und der Sekundärdichtung (D1) kann über ein sogenanntes Diagnoseventil (V_{D}), welches in **Fig. 2** dargestellt ist und weiter unten beschrieben wird, mit dem Vorratsbehälter (VB) verbunden werden. Im Fehlerfall, in dem der Druckabbau P_{ab} in den Bremskreisen (BK1, BK2) nicht über die (zentralen) Auslassventile (ZAV und, falls vorhanden, ZAV2) erfolgen kann, kann über das geöffnete Einspeiseschaltventil (FV) und den Einzelhauptzylinder in den Vorratsbehälter (VB) Druck abgebaut werden. Während der Druckabbau P_{ab} in **Fig. 1a** aufgrund der Parallelschaltung von einer Drossel (Dr1) und einem Rückschlagventil (RV1) in der hydraulischen Anbindung des Einzelhauptzylinders an den Vorratsbehälter nur über sehr geringe Volumenströme erfolgen kann, können beim Druckabbau P_{ab} in **Fig. 1b** größere Volumenströme in den Vorratsbehälter (VB) zurückströmen, sofern diese Volumenströme kleiner als ein durch die Auslegung von V_{D} vorbestimmter Schließvolumenstrom sind. Durch eine geeignete Ansteuerung z.B. über Pulsweitenmodulation (PWM) beteiligter Magnetventile (z.B. SV1, SV2, SV3, SV4, BP1, BP2, FV) kann der Druckabbau P_{ab} derart erfolgen, dass der Grenzvolumenstrom des Diagnoseventils (V_{D}) nicht überschritten wird und das Diagnoseventil (V_{D}) somit während des Druckabbaus offen bleibt. Andererseits kann die in **Fig. 1a** beschriebene Diagnose zur Überwachung der Abdichtung des Hauptzylinders, d.h. der Dichtheit der Sekundärdichtung (D1), über das Diagnoseventil (V_{D}) in ähnlicher Weise erfolgen, wobei über die Druckbereitstellungseinheit (DV) absichtlich Volumenströme oberhalb des Schließvolumenstroms von V_{D} in den Hauptzylinder gefördert werden, da bei geschlossenem Diagnoseventil (V_{D}) die Dichtigkeit über einen durch den Drucksensor (DG) erfassten Druckverlauf feststellbar ist. Zur Erhöhung der Sicherheit in **Fig. 1a** mit nur einem zentralen Auslassventil (ZAV) kann die hydraulische Anbindung zwischen dem Einzelhauptzylinder und dem Vorratsbehälter (VB) auch durch die Anbindung mit dem Diagnoseventil (V_{D}) aus **Fig. 1b** ersetzt werden.

Zur Absicherung der Primärdichtung (D2) im Hauptzylinder, welche im Gegensatz zu **Fig. 1a** nicht durch eine Drossel-Rückschlagventil-Kombination (Dr1, RV1) abgesichert ist, kann eine redundante Primärdichtung (D2r) verwendet werden. Die Diagnose der Primärdichtung kann bei einer Bremsung durch den Kraftwegsensor (KWS) und die Pedalwegsensoren (Sp1, Sp2) erfolgen. Alternativ kann die Diagnose der Primärdichtung über den Drucksensor im Einzelhauptzylinder und die Pedalwegsensoren (Sp1, Sp2) erfolgen.

**Fig. 2** zeigt eine mögliche Ausführungsform für ein Staudruckventil, welches als Diagnoseventil (V_{D}) z.B. in **Fig. 1b** zum Einsatz kommen kann. Das Staudruckventil kann zwei Öffnungen aufweisen, wobei eine der beiden Öffnungen einen Ventilsitz und vorzugsweise einen im Vergleich zu der anderen Öffnung größeren Öffnungsquerschnitt aufweisen kann. Weiterhin kann es einen Stößel mit Dichtkugel (18) aufweisen, wobei der Stößel im fluidstromlosen Fall derart durch eine Feder (F) im Ventilgehäuse eingespannt sein kann, dass die Dichtkugel (18) nicht den Ventilsitz der vorzugsweisen größeren Öffnung verschließen kann. Strömt dagegen über die Öffnung ohne Ventilsitz eine Flüssigkeit durch die Öffnung mit Ventilsitz kann durch die vorbestimmte Geometrie von Öffnungen, Ventilsitz und Dichtkugel (18) oberhalb eines sogenannten Schließvolumenstroms ein Staudruck verursacht werden, welcher die Dichtkugel (18) in den Ventilsitz drückt und damit das Ventil in dieser Richtung schließt. Schließt das Diagnoseventil (V_{D}) bei Volumenströmen oberhalb des Schließvolumenstroms, kann es in derselben Flussrichtung bei Unterschreiten eines weiteren durch die Auslegung von V_{D} vorbestimmten Öffnungsvolumenstroms wieder öffnen. In der anderen Stromrichtung kann Bremsflüssigkeit ohne Verschließen durch das Ventil gefördert werden.

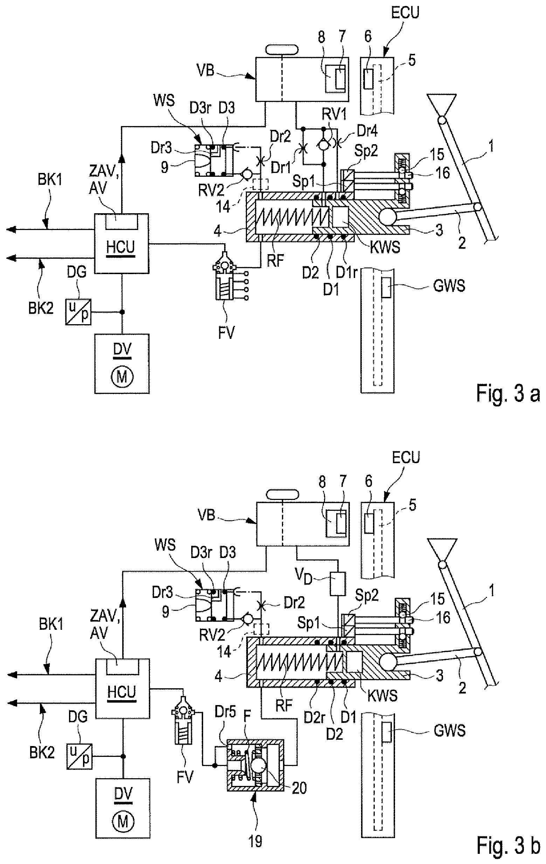

**Fig. 3a****-c** zeigen verschiedene erfindungsgemäße Ausführungsformen für eine sogenannte fehlersichere Einzelhauptzylindereinheit (SHZ) in einem erfindungsgemäßen Bremssystem, wobei die im Folgenden beschriebenen Absicherungen ebenfalls in einer Tandemhauptzylindereinheit (THZ) zum Einsatz kommen können. Die im Zusammenhang mit den **Fig. 3a****-c** beschriebenen jeweiligen Einzelhauptzylindereinheiten (SHZ) können in den Systemen gemäß **Fig. 1a****-b,** **Fig. 4a****-c** und **Fig. 5a****-b** eingesetzt werden.

**Fig. 3a** zeigt eine Ausführungsform einer Einzelhauptzylindereinheit (SHZ), welche im Vergleich zu der in **Fig. 1a** zur Absicherung der Abdichtung des Hauptzylinders nach außen eine weitere redundante Sekundärdichtung (D1r) aufweist. Der Hauptzylinder weist zudem zwischen der Sekundärdichtung (D1) und der redundanten Sekundärdichtung (D1r) eine weitere Öffnung auf, welche über eine Drossel (Dr4) mit dem Vorratsbehälter (VB) verbunden ist. Vermöge dieser Anbindung kann auch die Dichtheit der Sekundärdichtung (D1) diagnostiziert werden.

**Fig. 3b** zeigt eine Ausführungsform einer Einzelhauptzylindereinheit (SHZ), welche bezüglich der Anbindung des Hauptzylinders an den Vorratsbehälter (VB) der in **Fig. 1b** entspricht.

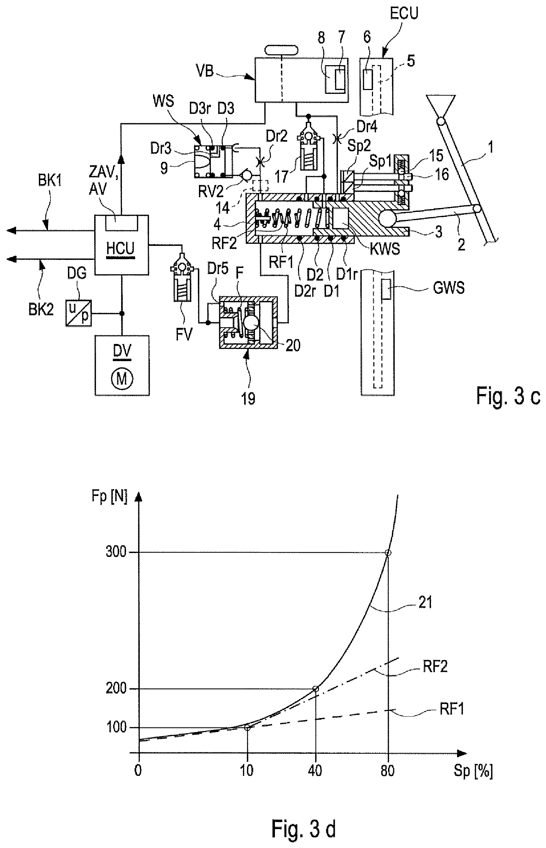

**Fig. 3c** zeigt eine Ausführungsform einer Einzelhauptzylindereinheit (SHZ), welche eine redundante Primärdichtung (D2r) und optional eine redundante Sekundärdichtung (D1r) aufweist. Der Hauptzylinder kann zusätzlich zur Schnüffelöffnung zwischen der Primärdichtung (D2) und der Sekundärdichtung (D1) eine weitere Öffnung zwischen der Primärdichtung (D2) und der redundanten Primärdichtung (D2r) aufweisen, wobei beide Öffnungen über eine hydraulische Leitung verbunden sein können, welche wiederum über ein schaltbares Vorratsbehälterabsperrventil (17) mit dem Vorratsbehälter (VB) verbunden ist.

Das Vorratsbehälterabsperrventil (17) kann als Redundanz für die Druckraumabdichtung betrachtet werden, da es bei Undichtigkeit einer der Primärdichtungen (D2, D2r) geschlossen werden kann. Das Vorratsbehälterabsperrventil (17) in **Fig. 3c** kann als stromlos offenes Magnetventil ausgeführt sein. Dadurch kann das Bremssystem auch im stromlosen Zustand befüllt und entlüftet werden.

Ähnlich wie im Falle der Drossel-Rückschlagventil-Kombination aus **Fig. 1a** und **Fig. 3a** kann zudem im Stillstand und bei geschlossenem Vorratsbehälterabsperrventil (17) über den Restdruck oder die Druckbereitstellungseinheit (DV) die Abdichtung des Hauptzylinders nach außen, d.h. die Sekundärdichtung (D1), diagnostiziert werden. Im Falle einer weiteren redundanten Sekundärdichtung (D1r) und einer weiteren Öffnung des Hauptzylinders zwischen der Sekundärdichtung (D1) und der redundanten Sekundärdichtung (D1r), welche über eine Drossel (Dr4) mit dem Vorratsbehälter (VB) verbunden ist, kann dabei in der Diagnose der Leckagestrom durch Dr4 berücksichtigt werden.

Zwischen weiteren redundanten Primärdichtungen können weitere Öffnungen vorgesehen werden, die ebenfalls über das Vorratsbehälterabsperrventil (17) mit dem Vorratsbehälter (VB) verbunden werden können.

Fehlersicherheit im Allgemeinen bedeutet hier, dass ein Einzelausfall eines Elements des Bremssystems durch eine Redundanz abgesichert ist und der Ausfall des Elements des Bremssystems oder der Ausfall der Redundanz durch eine Diagnose feststellbar ist. Als Einzelausfall (oder Einzelfehler) wird ein Ausfall (oder Fehler) von nur einem Element des Bremssystems bezeichnet. Doppelausfälle (oder Doppelfehler) bzw. Mehrfachausfälle (oder Mehrfachausfälle) bezeichnen dagegen Ausfälle (oder Fehler) zweier bzw. mehrerer Elemente des Bremssystems. Im Allgemeinen können Doppel- bzw. Mehrfachfehler akzeptiert werden, wenn deren Auftreten sehr unwahrscheinlich ist. Jedoch sollten Doppelfehler, die zum Totalausfall des Bremssystems führen können, in einem fehlersicheren System vermieden werden. Doppelfehler in einem fehlersicheren System können vermieden werden, wenn sogenannte schlafende Einzelfehler, welche jeweils mit einem weiteren Einzelfehler zu Doppelfehler führen, durch eine Redundanz mit zusätzlicher Diagnose abgesichert bzw. erkannt werden.

Ein Einzelhauptzylinder ist fehlersicher, wenn die Druckraumabdichtung des Hauptzylinders fehlersicher ist. Im regulären Fall, d.h. in Abwesenheit von Fehlern, erfolgt die Druckraumabdichtung eines Einzelhauptzylinders beispielsweise durch die Primärdichtung (D2) des Einzelhauptzylinders. Ein Einzelausfall der Abdichtung des Einzelhauptzylinderdruckraums, z.B. verursacht durch eine undichte Primärdichtung (D2), kann zu einem Totalausfall des Bremssystems führen. Die gewünschte Fehlersicherheit erfordert daher mindestens eine Redundanz für die Druckraumabdichtung und mindestens eine Diagnose der Druckraumabdichtung oder der Redundanz der Druckraumabdichtung. Ein fehlersicherer Hauptzylinder kann in den Stufen drei bis vier gemäß Norm SAE J3016 zum Einsatz kommen.

Die geforderte mindestens eine Redundanz für die Druckraumabdichtung kann z.B.
- wie in **Fig. 1a** und **Fig. 3a** durch die bereits beschriebene Drosselung durch die Kombination einer Drossel (Dr1) und eines Rückschlagventils (RV1) in der Anbindung des Hauptzylinders zum Vorratsbehälter (VB), in diesem Fall mit vernachlässigbarer Pedalwegänderung,
- oder wie in **Fig. 1b****,** **Fig. 3b** und **Fig. 3c** durch eine zweite redundante Primärdichtung (D2r),
- oder wie in **Fig. 3c** durch Schließen eines schaltbaren Vorratsbehälterabsperrventils (17), über welches die Schnüffelöffnung des Einzelhauptzylinders mit dem Vorratsbehälter (VB) verbunden ist,
realisiert werden. Während (abgesehen von der weiterhin erforderlichen mindestens einen Diagnose) eine Redundanz für die Fehlersicherheit des Hauptzylinders ausreichend ist, können zur Erhöhung der Sicherheit Redundanzen in sinnvoller Weise kombiniert werden. Beispielsweise können unabhängig von einer Redundanz (Kombination Dr1/RV1 oder Vorratsbehälterabsperrventil 17) in der Anbindung des Hauptzylinders an den Vorratsbehälter (VB) weitere redundante Primärdichtungen (z.B. D2r) zum Einsatz kommen. Prinzipiell ist auch eine Kombination aus der Kombination Dr1/RV1 und Vorratsbehälterabsperrventil 17 denkbar.

Die mindestens eine Diagnose der Druckraumabdichtung oder der Redundanz der Druckraumabdichtung kann als Diagnose der Druckraumabdichtung realisiert sein, z.B.
- wie in **Fig. 1b****,** **Fig. 3b** und **Fig. 3c****,** wobei über einen Kraftwegsensor (KWS) im Kolben des Hauptzylinders bzw. über einen Drucksensor im Druckraum des Hauptzylinders, welcher die Pedalkraft (Fₚ) bzw. den Druck im Druckraum misst, während des Bremsbetriebs die Dichtheit der Primärdichtung (D2) überwacht wird, indem bei Fußbetätigung die Pedalkraft (Fₚ) bzw. der Druck in Abhängigkeit der Bewegung des Kolbens (3), welche über die Pedalwegsensoren (Sp1, Sp2) erfasst wird, analysiert wird;
   oder als Diagnose der Redundanz der Druckraumabdichtung realisiert sein, z.B.
- wie in **Fig. 1a** und **Fig. 3a****,** wobei die Drossel-Rückschlagventil-Kombination (Dr3, RV1) wie oben beschrieben über den Restdruck im Bremssystem oder über die Druckbereitstellungseinheit (DV) im Stillstand des Fahrzeugs, vorzugsweise beim Parken, diagnostiziert werden kann, indem der Rücklauf zum Vorratsbehälter (VB), welcher z.B. über das Fördervolumen der Druckbereitstellungseinheit (DV) und/oder über die Füllstandsänderung im Vorratsbehälter (VB) ermittelt werden kann, mit der erwartbaren Sperrung durch das Rückschlagventil (RV1) und der Drosselung durch die Drossel (Dr1) verglichen wird;
- oder wie in **Fig. 3c****,** wobei über die Druckbereitstellungseinheit (DV) und entsprechenden Ventilstellungen (z.B. geschlossene SV1, SV2, SV3, SV4, ZAV, 14 und offenes BP1, FV) die Dichtheit des schaltbaren Vorratsbehälterabsperrventils (17), ggf. unter Einbeziehen des Füllstandsensors im Vorratsbehälter (VB), überprüft werden kann.

Im Vergleich zu Diagnosen im Stillstand des Fahrzeugs, vorzugsweise beim Parken, kann die Sicherheit durch Diagnosen, welche während einer Bremsung und damit insbesondere mehrfach während der Fahrt erfolgen, erhöht werden. Weitere redundante Primärdichtungen (z.B. D2r) im Hauptzylinder können ebenfalls über den Kraftwegsensor (KWS) bzw. den Drucksensor im Druckraum des Hauptzylinders diagnostiziert werden.

Wird das Bremssystem wie bei "brake-by-wire"-Systemen üblich mit einem Wegsimulator (WS) gekoppelt, sollte auch der Wegsimulator (WS) fehlersicher ausgeführt sein. Ein Wegsimulator (WS) ist fehlersicher, wenn die Druckraumabdichtung des Wegsimulators (WS) fehlersicher ist. Im regulären Fall, d.h. in Abwesenheit von Fehlern, erfolgt die Druckraumabdichtung des Wegsimulators (WS) beispielsweise durch die Wegsimulatordichtung (D3) des Wegsimulators (WS). Ein Einzelausfall der Abdichtung des Wegsimulatordruckraums, z.B. verursacht durch eine undichte Wegsimulatordichtung (D3), kann ebenfalls zu einem Totalausfall des Bremssystems führen. Die gewünschte Fehlersicherheit erfordert daher mindestens eine Redundanz für die Druckraumabdichtung und mindestens eine Diagnose der Druckraumabdichtung oder der Redundanz der Druckraumabdichtung.

Die geforderte mindestens eine Redundanz für die Druckraumabdichtung kann z.B.
- durch eine zweite redundante Wegsimulatordichtung (D3r);
- oder wie in **Fig. 1a****,** **Fig. 1b****,** **Fig. 3a, Fig. 3b** und **Fig. 3c** durch eine zweite redundante Wegsimulatordichtung (D3r) und der bereits beschriebenen Drosselung der Leckage durch die Drossel (Dr3) zwischen der Wegsimulator- (D3) und der redundanten Wegsimulatordichtung (D3r), in diesem Fall mit langsamer Pedalwegänderung;
realisiert werden.

Die mindestens eine Diagnose der Druckraumabdichtung des Wegsimulators oder der Redundanz der Druckraumabdichtung kann als Diagnose der Druckraumabdichtung realisiert sein, z.B.
- wie in **Fig. 1b****,** **Fig. 3b** und **Fig. 3c****,** wobei über einen Kraftwegsensor (KWS) im Kolben des Hauptzylinders bzw. über einen Drucksensor im Druckraum des Hauptzylinders, welcher die Pedalkraft (Fₚ) bzw. den Druck misst, während des Bremsbetriebs die Dichtheit der Wegsimulatordichtung (D3) (und der Primärdichtung (D2)) überwacht wird, indem bei Fußbetätigung die Pedalkraft (Fₚ) bzw. der Druck in Abhängigkeit der Bewegung des Kolbens (3), welche über die Pedalwegsensoren (Sp1, Sp2) erfasst wird, analysiert wird;
- oder wie in **Fig. 1a****,** **Fig. 1b****,** **Fig. 3a, Fig. 3b** und **Fig. 3c****,** wobei die Dichtheit der Wegsimulatordichtung (D3) bei entsprechenden Ventilstellungen über den Restdruck im Bremssystem oder über die Druckbereitstellungseinheit (DV) im Stillstand des Fahrzeugs, vorzugsweise beim Parken, überwacht wird, indem der Rücklauf zum Vorratsbehälter (VB), welcher z.B. über das Fördervolumen der Druckbereitstellungseinheit (DV) und/oder über die Füllstandsänderung im Vorratsbehälter (VB) ermittelt werden kann, mit der erwartbaren Sperrung durch das Rückschlagventil (RV1) und der Drosselung durch die Drosseln (Dr1, Dr2) ggf. unter Einbeziehen des Füllstandsensors im Vorratsbehälter (VB), verglichen wird;
- oder wie in **Fig. 3c****,** wobei über die Druckbereitstellungseinheit (DV) und entsprechenden Ventilstellungen (z.B. geschlossene SV1, SV2, SV3, SV4, ZAV, 17 und offenes BP1, FV, 14) die Dichtheit der Wegsimulatordichtung (D3), ggf. unter Einbeziehen des Füllstandsensors im Vorratsbehälter (VB), überprüft werden kann.

Zur Erhöhung der Sicherheit können Diagnosen in sinnvoller Weise kombiniert werden.

Durch die hydraulische Kopplung der Druckräume vom Hauptzylinder und Wegsimulator (WS) kann im Allgemeinen eine diagnostizierte Undichtigkeit im gekoppelten Druckraum nicht lokalisiert werden, da diese z.B. sowohl durch eine undichte Primärdichtung (D2) des Hauptzylinders als auch durch eine undichte Wegsimulatordichtung (D3) hervorgerufen werden kann. Für die Fehlersicherheit ist das insofern ausreichend, als eine diagnostizierte Dichtheit im gekoppelten Druckraum die Dichtheit beider Dichtungen (D2, D3) impliziert. Bei vorhandenem Wegsimulatortrennventil (14) kann eine etwaige Leckage im Wegsimulator (WS) oder Hauptzylinder lokalisiert werden.

Die Sicherheitsanforderungen an die Abdichtung des Einzelhauptzylinders nach außen, welche im regulären Fall beispielsweise durch eine Sekundärdichtung (D1) erfolgt, können im Vergleich zur Abdichtung des Hauptzylinderdruckraums schwächer sein, da zum einen die Sekundärdichtung (D1) nicht mit hohen Drücken beaufschlagt wird und zum anderen die Fehlerfolgen weniger kritisch sind. Im Gegensatz zur strengeren Forderung nach Fehlersicherheit ist die Sicherheit dann gewährleistet, wenn mindestens eine Redundanz des Elements und/oder ein Ausfall des Elements diagnostiziert werden kann.

Ein Einzelausfall der Abdichtung des Einzelhauptzylinders nach außen, z.B. eine undichte Sekundärdichtung (D1), welche zu einem Verlust von Bremsflüssigkeit führen kann, kann z.B. durch eine Redundanz
- wie in **Fig. 3a** und **Fig. 3c** durch eine zweite redundante Sekundärdichtung (D1r)
- oder wie in **Fig. 3a** und **Fig. 3c** durch Drosselung durch eine weitere Drossel (Dr4), über welche eine weitere Öffnung im Einzelhauptzylinder zwischen der Sekundärdichtung (D1) und der redundanten Sekundärdichtung (D1r) mit dem Vorratsbehälter (VB) verbunden ist, in diesem Fall mit verlangsamter Leckage, welche wiederum, im Fahrzeugstillstand z.B. über eine Änderung des Bremsflüssigkeitsniveau im Vorratsbehälter (VB) überwacht werden kann,
abgesichert werden.

Zudem kann im Nichtbremsbetrieb, wobei der Nichtbremsbetrieb einen Betrieb bezeichnet, bei dem kein Bremsvorgang stattfindet, und insbesondere den Stillstand des Fahrzeugs (z.B. beim Parken) bezeichnet, die Dichtheit der Sekundärdichtung (D1) festgestellt bzw. diagnostiziert werden, indem
- wie in **Fig. 1a** und **Fig. 3a** und bereits oben beschrieben im ersten Schritt über den Restdruck in den Bremskreisen (BK1, BK2) und im zweiten Schritt über die Druckbereitstellungseinheit (DV) Volumen über den Hauptzylinder in den Vorratsbehälter (VB) gefördert wird und bei einem eingeregelten Druck das Fördervolumen der Druckbereitstellungseinheit (DV) mit dem regulären und erwartbaren Drosselstrom verglichen wird,
- oder wie in **Fig. 1b** und **Fig. 3b** und bereits oben beschrieben über die Druckbereitstellungseinheit (DV) Volumen mit Fluidströmen oberhalb des Schließvolumenstroms des Diagnoseventils (V_{D}) über den Hauptzylinder in den Vorratsbehälter (VB) gefördert und der durch den Drucksensor (DG) erfasste Druckverlauf analysiert wird,
- oder wie in **Fig. 3c** über die Druckbereitstellungseinheit (DV) Volumen mit Fluidströmen über den Hauptzylinder in den Vorratsbehälter (VB) gefördert wird, wobei das Vorratsbehälterabsperrventil (17) geschlossen ist und bei einem eingeregelten Druck das Fördervolumen der Druckbereitstellungseinheit (DV) mit dem regulären und erwartbaren Drosselstrom durch die Drossel (Dr4) verglichen wird.

Zur Erhöhung der Sicherheit können Redundanzen und Diagnosen in verschiedener, sinnvoller Weise kombiniert werden. In den Diagnosen kann ebenfalls oder zusätzlich der Füllstandssensor (6) im Vorratsbehälter (VB) zur Leckageerkennung verwendet werden.

Die Sicherheitsanforderungen an die Abdichtung des Einspeiseschaltventils (FV) im geschlossenen Zustand, d.h. der Abdichtung des Einspeiseschaltventils (FV), welche im regulären Fall beispielsweise durch eine Dichtung im Ventilsitz erfolgt, können im Vergleich zur Abdichtung des Hauptzylinderdruckraums ebenfalls schwächer sein, da die Fehlerfolgen weniger kritisch sind. Im Gegensatz zur strengeren Forderung nach Fehlersicherheit ist die Sicherheit dann gewährleistet, wenn mindestens eine Redundanz des Elements und/oder ein Ausfall des Elements diagnostiziert werden kann.

Ein Einzelausfall der Abdichtung des Einspeiseschaltventils (FV), welcher, z.B. durch einen Schmutzpartikel verursacht, die "brake-by-wire" Funktionalität beeinträchtigt und die Kraft-Weg-Charakteristik des Bremspedalsystems verstimmen kann, kann z.B. durch eine Redundanz
- durch ein weiteres in Reihe geschaltetes (in den Figuren nicht eingezeichnetes) Magnetventil,
- oder wie in **Fig. 1a****,** **Fig. 1b****,** **Fig. 3a, Fig. 3b****,** **Fig. 3c** und bereits beschrieben durch Deaktivieren des zweiten Bremskreises (BK2) durch Schließen der Magnetventile ZAV, SV3, SV4, BP1 oder ggf. ZAV, BP1, BP2, wobei über den ersten Bremskreis (BK1) noch ausreichend Bremskraft (z.B. je nach Radaufteilung noch 50% Bremswirkung) zur Verfügung steht.

Zudem kann wie in **Fig. 1a****,** **Fig. 1b****,** **Fig. 3a, Fig. 3b****,** **Fig. 3c** vorzugsweise im Nichtbremsbetrieb die Dichtheit des geschlossenen Einspeiseschaltventils (FV) über die Druckbereitstellungseinheit (DV) und Pedalwegänderungen festgestellt werden. Zur Erhöhung der Sicherheit können Redundanzen und Diagnosen in verschiedener, sinnvoller Weise kombiniert werden.

Während im Falle, dass die (zentralen) Auslassventile (ZAV, ZAV2) in der hydraulischen Steuereinheit (HCU) nicht mehr geöffnet werden können, der Druckabbau P_{ab} über den Hauptzylinder in **Fig. 1a** und **Fig. 3a** nur gedrosselt (über Dr1) stattfinden kann, kann der Druckabbau P_{ab} in **Fig. 1b****,** **Fig. 3b** und **Fig. 3c** auch wenig gedrosselt über den Hauptzylinder erfolgen.

Die hydraulische Anbindung zwischen dem mindestens einen hydraulischen Ausgang des Hauptzylinders und dem Einspeiseschaltventil (FV) kann wie in **Fig. 3b** und **Fig. 3c** durch ein Staudruckventil (19) erfolgen, welches derart aufgebaut und angeschlossen ist, dass es bei übermäßig hohen Pedalkräften (größer ca. 500N) in der Fluidrichtung vom Hauptzylinder zur hydraulischen Steuereinheit zur Drossel wird, indem beispielsweise eine löchrige Ventilplatte (20) innerhalb des Staudruckventils (19) vermöge des Staudruckeffekts den Hauptausgang sperrt aber über die Anordnung der Drosselstelle in der Ventilplatte (20) den zweiten Drosselausgang aufrecht erhält.

**Fig. 3d** zeigt eine beispielhafte Pedalkraft-Weg-Charakteristik (21) des Bremspedals (1) der Einzelhauptzylindereinheit (SHZ) in **Fig. 3c****,** wobei der Pedalweg (Sp) relativ zum Gesamtpedalweg angegeben ist. Die Rückstellkraft des Bremspedals (1) wird von einer Rückstellfeder (RF1) im Hauptzylinder (Bereich bis 10% in **Fig. 3d****)** und einer steuerbaren Elastizität im Wegsimulator (WS) (Bereich ab 40% in **Fig. 3d****)** generiert. Um im Falle einer fehlerhaften Abdichtung der Druckräume des Hauptzylinders oder des Wegsimulators (WS) einen Durchfall des Bremspedals (1) zu verhindern, kann eine weitere Rückstellfeder (RF2) im Hauptzylinder integriert werden, welche den Gradienten der Pedalkraft-Weg-Charakteristik des Bremspedals (1) z.B. ab ca. 10% des Pedalwegs anhebt.

Eine bevorzugte Ausführungsform des erfindungsgemäßen Bremssystems kann von **Fig. 3b** abgeleitet werden, wobei auf das Diagnoseventil V_{D} in der Anbindung des Hauptzylinders an den Vorratsbehälter (VB) verzichtet wird, d.h. der Hauptzylinder ist über die Schnüffelöffnung zwischen der Primär- (D2) und Sekundärdichtung (D1) direkt mit dem Vorratsbehälter (VB) verbunden. Der Einzelhauptzylinder in dieser Ausführungsform ist dank der redundanten Primärdichtung (D2r), der redundanten Wegsimulatordichtung (D3r) und des Kraftwegsensors (KWS) nach der obigen Definition fehlersicher. Eine Leckage der Sekundärdichtung (D1) kann im Fahrzeugstillstand über das Füllstandssensorelement (6) im Vorratsbehälter (VB) bzw. auf der PCB diagnostiziert werden. Zudem kann im Service (z.B. alle zwei bis drei Jahre) die Sekundärdichtung (D1) über eine Druckluftbeaufschlagung von z.B. 5 bar im Vorratsbehälter (VB) bei geschlossenen Ventilen FV, ZAV und, falls vorhanden, ZAV2, AV1-4, Wegsimulatortrennventil auf Dichtheit geprüft werden.

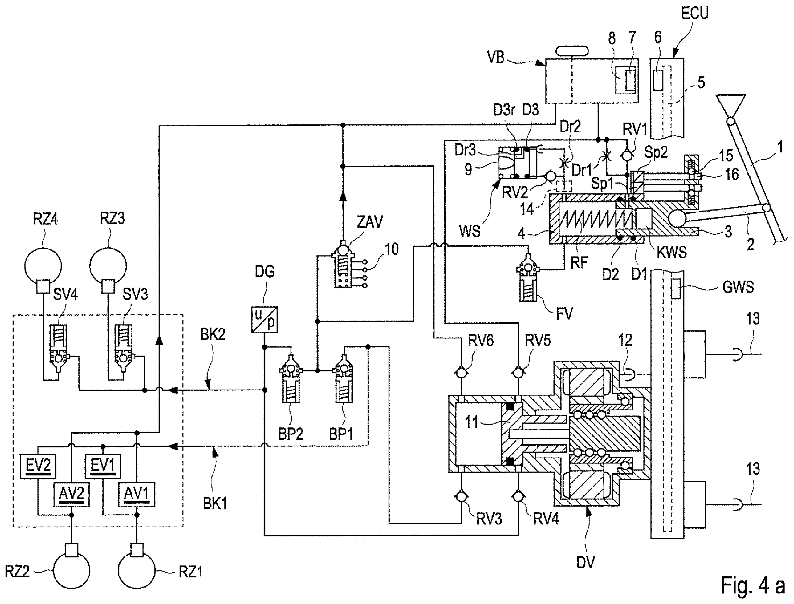

**Fig. 4a** zeigt eine weitere Ausführungsform eines erfindungsgemäßen Bremssystems, wobei im Vergleich zu **Fig. 1a** und **Fig. 1b** die Druckversorgungseinrichtung (DV) anstelle einer Rotationspumpe eine zweikreisige Doppelhubkolbenpumpe aufweist, welche einen Kolben, zwei Druckräume, je einen vor und hinter dem Kolben, und eine Zentralstange aufweisen kann, wobei der Kolben über die Zentralstange und einem Getriebe mit einem elektromotorischen Antrieb in beide Richtungen bewegt werden kann. Beispielsweise können das Getriebe als Kugelgewindetrieb und der elektromotorische Antrieb als bürstenloser Gleichstrommotor oder in anderer Weise realisiert werden. Die im Zusammenhang mit den **Fig. 4a****-c** und **Fig. 5a****-b** beschriebenen jeweiligen Gestaltungen der Druckversorgungseinrichtung (DV) können in bzw. mit den erfindungsgemäßen Systemen gemäß **Fig. 1a****-b** und **Fig. 3a****-c** eingesetzt werden.

Die Anbindung der Radzylinder (z.B. RZ1, RZ2) an einen Bremskreis (z.B. BK1) kann, wie im Stand der Technik bekannt, über je ein schaltbares Einlassventil (z.B. EV1, EV2) erfolgen, wobei die Radzylinder (z.B. RZ1, RZ2) dann über je ein schaltbares Auslassventil (z.B. AV1, AV2) mit dem Vorratsbehälter (VB) verbunden werden können. Die Einlassventile bzw. Auslassventile können auch als Schaltventile gesehen werden. Alternativ kann die Anbindung der Radzylinder (z.B. RZ3, RZ4) an einen Bremskreis (z.B. BK2) wie in **Fig. 1a** und **Fig. 1b** über je nur ein Schaltventil (z.B. SV3, SV4) erfolgen, wobei in diesem Fall mindestens ein Bremskreis über ein zentrales Auslassventil (ZAV) und mögliche weitere Ventile schaltbar mit dem Vorratsbehälter (VB) verbunden sein kann. Durch eine solche Anbindung kann die Anzahl der Magnetventile reduziert werden, wodurch Kosten eingespart werden können.

Einer der zwei Druckräume der Doppelhubkolbenpumpe kann über einen hydraulischen Ausgang der Pumpe sowie über ein zur Druckbereitstellungseinheit (DV) hin schließendes Rückschlagventil (RV3) und mögliche weitere Ventile an den ersten Bremskreis (BK1) angebunden werden. Ferner kann dieser Druckraum über einen Nachsaugeeingang (Schnüffelöffnung bzw. Öffnung) der Pumpe und ein weiteres zum Vorratsbehälter (VB) hin schließendes Rückschlagventil (RV6) sowie über mögliche weitere Ventile mit dem Vorratsbehälter (VB) verbunden werden. Der andere Druckraum kann ebenfalls über einen weiteren hydraulischen Ausgang der Pumpe und ein zur Druckbereitstellungseinheit (DV) hin schließendes Rückschlagventil (RV4) sowie mögliche weitere Ventile an den zweiten Bremskreis angeschlossen werden. Ferner kann ebenfalls jener Druckraum über einen weiteren Nachsaugeeingang (Schnüffelöffnung bzw. Öffnung) der Pumpe und ein weiteres zum Vorratsbehälter (VB) hin schließendes Rückschlagventil (RV5) sowie mögliche weitere Ventile mit dem Vorratsbehälter (VB) verbunden werden. Die Pumpe mit den beiden Nachsaugeeingängen und den beiden hydraulischen Ausgängen sowie der Kolben können derart ausgeführt sein, dass in beiden Bewegungsrichtungen des Kolbens, d.h. sowohl beim Vor- als auch beim Rückhub, Bremsflüssigkeit aus dem Vorratsbehälter (VB) in mindestens einen der beiden Bremskreise (BK1, BK2) gefördert und damit Bremsdruck aufgebaut werden kann, wobei definitionsgemäß der Vorhub die Bewegungsrichtung des Kolbens bezeichnet, bei welcher Bremsflüssigkeit aus dem der Zentralstange des Kolbens abgewandten Druckraum (in **Fig. 4a** über RV3) herausgeschoben wird. Andererseits bezeichnet der Rückhub die Bewegungsrichtung des Kolbens, bei welcher Bremsflüssigkeit aus dem anderen Druckraum (in **Fig. 4a** über RV4) herausgeschoben wird, wobei die Kolbenwirkfläche des Kolbens im Vergleich zu der Kolbenwirkfläche des Kolbens beim Vorhub kleiner sein kann.

Je nach Ausführungsform können die beiden Bremskreise (BK1, BK2) wie in **Fig. 1a** durch ein Bypassventil (BP1) oder wie in **Fig. 1b** durch eine Reihenschaltung zweier Bypassventile (BP1, BP2) und durch weitere mögliche Ventile schaltbar verbunden werden. Dadurch kann bei einem Vorhub des Kolbens in der Druckbereitstellungseinheit (DV) wahlweise Bremsdruck im ersten Bremskreis (BK1) oder in beiden Bremskreisen (BK1, BK2) aufgebaut werden. Analog kann bei einem Rückhub des Kolbens in der Druckbereitstellungseinheit (DV) wahlweise Bremsdruck im zweiten Bremskreis (BK2) oder in beiden Bremskreisen (BK1, BK2) aufgebaut werden.

Im Vergleich zu einer in Bremssystemen ebenfalls üblichen, aber nicht dargestellten Einfachhubkolbenpumpe, welche nur in einer Hubrichtung (Vorhub) Volumen in das Bremssystem fördern kann, kann sich das erfindungsgemäße Bremssystem mit einer Doppelhubkolbenpumpe und einer beispielhaften Anbindung wie in **Fig. 4a** insofern als vorteilhaft erweisen, als der Zeitaufwand eingespart werden kann, welcher bei einer Einfachhubkolbenpumpe dann entsteht, wenn vor dem Nachfördern von zusätzlich benötigtem Bremsflüssigkeitsvolumen der Kolben bei geschlossenem hydraulischen Ausgang des Druckraums ganz oder teilweise zurückgefahren werden muss. Während eines solchen Leerrückhubs kann das Bremssystem nicht durch die Druckbereitstellungseinheit (DV) mit Druck beaufschlagt werden. In dem erfindungsgemäßen Bremssystem kann dagegen mit der Doppelhubkolbenpumpe in **Fig. 4a** durch Wechsel von Vor- und Rückhüben kontinuierlich Bremsdruck in den Bremskreisen (BK1, BK2) bereitgestellt werden. Dadurch kann insbesondere die Baulänge der Doppelhubkolbenpumpe reduziert werden.

Das erfindungsgemäße Bremssystem mit einer Doppelhubkolbenpumpe und einer beispielhaften Anbindung wie in **Fig. 4a** kann sich andererseits insofern als vorteilhaft erweisen, als die unterschiedlich großen Kolbenwirkflächen beim Vor- und Rückhub des Kolbens in der Auslegung des Getriebes und des elektromotorischen Antriebs für ein sogenanntes downsizing genutzt werden können. Im Hinblick auf die in Bremssystemen üblichen zwei Druckbereiche - zum einen einem Normaldruckbereich von Drücken bis zum sogenannten Blockierdruck bei hohem Reibbeiwert im System Rad/Untergrund von z.B. ca. 100-120 bar und zum anderen einem höheren Druckbereich von Drücken bis z.B. ca. 200 bar - können vorzugsweise die Kolbenwirkflächen des Kolbens, das Getriebe und der elektromotorische Motor der Doppelhubkolbenpumpe derart ausgelegt werden, dass Drücke im Normaldruckbereich beim Vorhub noch ausreichend abgestützt werden können, während Drücke im höheren Druckbereich nur durch die kleinere Kolbenrückseite abgestützt werden können. Vorhübe mit der größeren Kolbenrückseite können sich insbesondere dann als vorteilhaft erweisen, wenn beim Befüllen der Radzylinder zunächst möglichst schnell das Lüftspiel der Bremsen überwunden werden muss, in welchem der Bremsdruck verhältnismäßig langsam ansteigt. Rückhübe mit der kleineren Kolbenrückseite können sich insbesondere dann als vorteilhaft erweisen, wenn der Druck nach Überwinden des Lüftspiels der Bremsen deutlich ansteigt und bei stark ansteigendem Druck weniger Bremsflüssigkeitsvolumen gefördert werden muss.

In einer Auslegung mit downsizing kann beim Druckaufbau P_{auf} nach einem Rückhub im höheren Druckbereich ein Leervorhub erforderlich sein, wodurch beispielsweise bei geschlossenen Schalt- (z.B. SV3, SV4) und Einlassventilen (z.B. EV1, EV2), einem geschlossenen Einspeiseschaltventil (FV), falls vorhanden, einem vorzugsweise geschlossenen zweiten Bypassventil (BP2), einem geöffneten ersten Bypassventil (BP1) sowie einem geöffneten zentralen Auslassventil (ZAV) Bremsflüssigkeit aus dem Druckraum mit der größeren Kolbenwirkfläche in den Vorratsbehälter (VB) befördert werden kann. Ein solcher Leervorhub kann bis zu ca. 100ms dauern, muss aber nur sehr selten eingesetzt werden. Im Anschluss kann der Druckaufbau P_{auf} im höheren Druckbereich über einen weiteren Rückhub fortgesetzt werden.

Wie im Falle der Rotationspumpen in **Fig. 1a** und **Fig. 1b** kann der Druckabbau P_{ab} in den Bremskreisen (BK1, BK2) im regulären Fall über ein zentrales Auslassventil (ZAV) oder weitere (zentrale) Auslassventile (ZAV2) oder im Fehlerfall über das Einspeiseschaltventil (FV) und den Einzelhauptzylinder erfolgen. Im Gegensatz zu einem Druckabbau P_{ab} wie z.B. einem ABS-Eingriff über Auslassventile (z.B. AV1, AV2) je Bremszylinder (z.B. RZ1, RZ2) kann ein Druckabbau P_{ab} über die Schaltventile (z.B. SV3, SV4) und ein zentrales Auslassventil (ZAV), wobei die Schaltventile und/oder die Bypassventile (BP1, BP2) über Pulsweitenmodulation (PWM) gesteuert werden können, bezüglich der Genauigkeit in Druckdifferenzen zwischen den einzelnen Radzylindern (RZ1, RZ2, RZ3, RZ4) und/oder Bremskreisen (BK1, BK2) als vorteilhaft bewertet werden. Auch die Geräuschentwicklung kann dadurch auf ein gewisses Minimum reduziert werden. Der Kolben der Doppelhubkolbenpumpe kann über deren elektromotorischen Antrieb bei einem vollständigen Druckabbau P_{ab} wieder über einen Rückhub in seine Ausgangslage gebracht werden, wobei Bremsflüssigkeitsvolumen aus dem Druckraum mit der kleineren Kolbenwirkfläche ebenfalls über mindestens eines der Bypassventile (BP1, BP2) und das zentrale Auslassventil (ZAV) in den Vorratsbehälter (VB) gefördert wird.

Aufgrund der zum Vorratsbehälter (VB) hin schließenden Rückschlagventile (RV5, RV6) in der Anbindung der Doppelhubkolbenpumpe zum Vorratsbehälter (VB) kann insbesondere die (teilweise) Entleerung und Entlüftung beider Druckräume der Doppelhubkolbenpumpe in dieser Ausführungsform nur über die hydraulischen Ausgänge der Pumpe, die jeweiligen Rückschlagventile (RV3, RV4) und die jeweiligen Bremskreise (BK1, BK2) erfolgen.

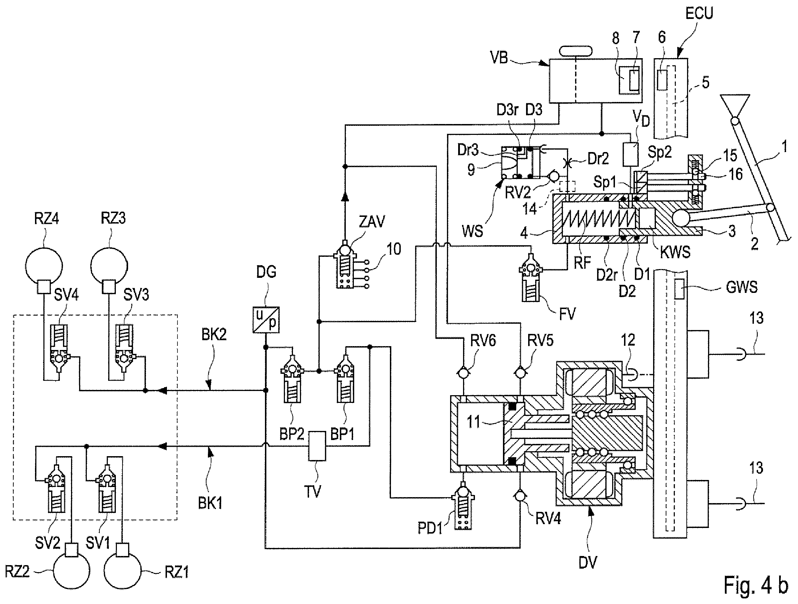

**Fig. 4b** zeigt eine weitere Ausführungsform, in welcher im Vergleich zu **Fig. 4a** vorzugsweise das Rückschlagventil (RV3) am Pumpenausgang des Druckraums mit der größeren Wirkfläche durch ein schaltbares Magnetventil (PD1) ersetzt wird. Wie in **Fig. 4a** können die Bremskreise (BK1, BK2) durch ein Bypassventil (BP1) oder durch eine Reihenschaltung zweier Bypassventile (BP1, BP2) verbindbar sein. Zudem kann im ersten Bremskreis (BK1) ein weiteres schaltbares Trennventil (TV) zum Einsatz kommen.

Bei einem Vorhub des Kolbens kann das schaltbare Magnetventil PD1 geöffnet und Druck wie in **Fig. 4a** in den Bremskreisen (BK1, BK2) aufgebaut werden. Andererseits kann bei einem Rückhub des Kolbens das schaltbare Magnetventil PD1 geschlossen werden, so dass beim Druckaufbau P_{auf} kein Bremsflüssigkeitsvolumen aus den Bremskreisen (BK1, BK2) in den Druckraum mit der größeren Kolbenwirkfläche zurückgefördert werden muss.

Im Gegensatz zu der Ausführungsform in **Fig. 4a** kann in der Ausführungsform in **Fig. 4b** nach einem Vorhub das schaltbare Magnetventil PD1 zum Druckabbau P_{ab} geöffnet werden, wodurch beispielsweise Bremsflüssigkeitsvolumen über geöffnete Schaltventile (SV1, SV2, SV3, SV4), geöffnete Bypassventile (BP1, BP2) und, falls vorhanden, ein geöffnetes Trennventil (TV) im ersten Bremskreis (BK1) sowie bei geschlossenem zentralen Auslassventil (ZAV) und geschlossenem Einspeiseschaltventil (FV) aus den Bremskreisen (BK1, BK2) in den Druckraum der Doppelhubkolbenpumpe mit der größeren Kolbenwirkfläche zurückströmen kann. Da dabei gleichzeitig Bremsflüssigkeit aus dem Druckraum mit der kleineren Kolbenwirkfläche in den zweiten Bremskreis gefördert wird, kann ein solcher Druckabbau P_{ab} unvollständig sein.

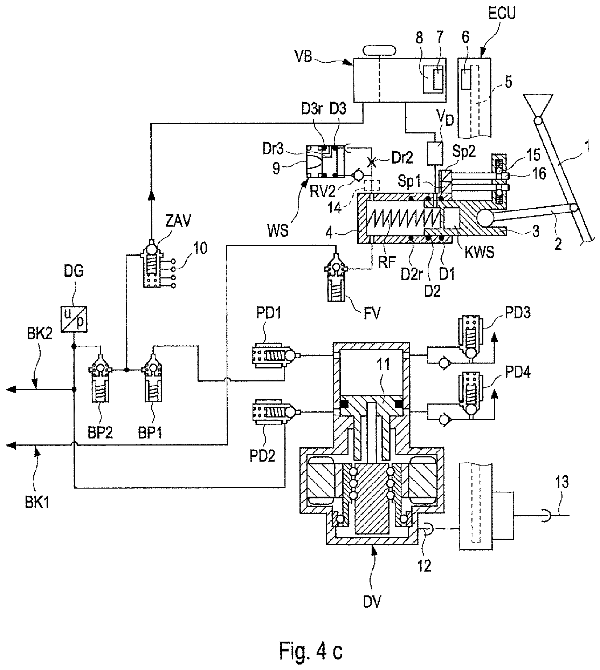

In der hydraulischen Anbindung der Doppelhubkolbenpumpe in **Fig. 4a** können weitere Rückschlagventile (RV3, RV4, RV5, RV6) an den Pumpenein- und ausgängen durch je ein schaltbares Magnetventil (PD1, PD2, PD3, PD4) ersetzt werden. Beispielsweise zeigt **Fig. 4c** eine weitere Ausführungsform, in welcher alle Rückschlagventile (RV3, RV4, RV5, RV6) durch Magnetventile ersetzt werden. Wie in **Fig. 4a** können die Bremskreise durch ein Bypassventil (BP1) oder durch eine Reihenschaltung zweier Bypassventile (BP1, BP2) verbunden werden. In der Ausführungsform in **Fig. 4c** kann der Einzelhauptzylinder, welcher zudem zwecks Pedalkraftmessung über einen Kraftwegsensor (KWS) im Kolben verfügen kann, beispielsweise auch über das Einspeiseschaltventil (FV) direkt an den ersten Bremskreis (BK1) angebunden werden. In der Ausführungsform gemäß **Fig. 4a** kann ein redundantes zentrales Auslassventil (ZAV2) eingesetzt werden, welches z.B. mit dem ersten Bremskreis (BK1) verbunden ist.

Durch verschiedene Kombinationen aus geöffneten und geschlossenen Magnetventilen (PD1, PD2, PD3, PD4) können unterschiedliche Betriebszustände der Doppelhubkolbenpumpe eingestellt werden. Wie in **Fig. 4b** kann bei Druckabbau P_{ab} Bremsflüssigkeit aus den Bremskreisen (BK1, BK2) z.B. über PD1 in die Doppelhubkolbenpumpe zurückgeführt werden. Außerdem kann durch Öffnung eines Pumpeneingangs (z.B. PD3) und Schließung des zugehörigen Pumpenausgangs (z.B. PD1) Bremsflüssigkeit aus dem jeweiligen Druckraum in den Vorratsbehälter (VB) gefördert werden.

**Fig. 5a** zeigt eine weitere Ausführungsform, welche im Vergleich zur **Fig. 4a** anstelle eines Einzelhauptzylinders (SHZ) einen Tandemzylinder (THZ) aufweist. Der Kolben (3) der Bremspedaleinrichtung kann über einen ersten Druckraum und eine erste Rückstellfeder (RF) mit einem zweiten, sogenannten Schwimmkolben (SK) gekoppelt werden, welcher wiederum in einem weiteren Druckraum gegen eine zweite Rückstellfeder (RF3) verfahren werden kann. Wie in **Fig. 4a** kann beispielsweise ein erster Druckraum zwischen dem Kolben (3) und dem Schwimmkolben (SK) des Tandemhauptzylinders (THZ) über einen hydraulischen Ausgang und ein erstes Einspeiseschaltventil (FV) mit der hydraulischen Leitung zwischen dem ersten Bypassventil (BP1) und dem zentralen Auslassventil (ZAV) verbunden werden. Über beispielsweise einen weiteren hydraulischen Ausgang des ersten Druckraums und, falls vorhanden, das Wegsimulatortrennventil (14) kann der Wegsimulator (WS) mit dem Tandemhauptzylinder (THZ) verbunden werden. Erfindungsgemäß kann ferner der zweite Druckraum des Tandemhauptzylinders (THZ) über einen weiteren hydraulischen Ausgang und ein zweites Einspeiseschaltventil (FV2) sowie mögliche weitere Ventile an den zweiten Bremskreis (BK2) angeschlossen werden, wobei das zweite Einspeiseschaltventil (FV2) für eine Rückfallebene vorzugsweise als stromlos offenes Magnetventil ausgeführt werden kann. Beide Druckräume des Tandemhauptzylinders (THZ) können je eine Schnüffelöffnung bzw. Öffnung aufweisen, welche beispielsweise von mindestens je einer Primär- (D2, D5) und Sekundärdichtung (D1, D4) abgedichtet und jeweils z.B. wie in **Fig. 1a** über eine Parallelschaltung von einer Drossel und einem zum Vorratsbehälter (VB) hin schließenden Rückschlagventil mit dem Vorratsbehälter (VB) verbunden werden kann. Wahlweise können die hydraulischen Anbindungen zwischen den Druckräumen des Tandemhauptzylinders und dem Vorratsbehälter (VB) auch wie in **Fig. 1b****,** **Fig. 3b** über Diagnoseventile (V_{D}) oder wie in **Fig. 3c** über das Vorratsbehälterabsperrventil (17) oder bei vorhandener redundanter Primärdichtung (D2, D5) über eine hydraulische Leitung erfolgen.

Im regulären Fall können das erste Einspeiseventil (FV) und das zweite Einspeiseschaltventil (FV2) bei einer Bremsung geschlossen werden, wobei dann die Druckbereitstellungseinheit (DV) über "brake-by-wire" und entsprechende Ventilschaltungen in der hydraulischen Steuereinheit (HCU) Bremsdruck in den Bremskreisen (BK1, BK2) aufbauen kann.

Im Vergleich zu einem Einzelhauptzylinder (SHZ) kann durch den Einsatz eines Tandemhauptzylinders (THZ) die Wahrscheinlichkeit eines Totalausfalls des Hauptzylinders auch ohne weitere redundante Primär- oder Sekundärdichtungen reduziert werden.

**Fig. 5b** zeigt eine weitere Ausführungsform, welche im Vergleich zur **Fig. 5a** einen Tandemhauptzylinder (THZ) mit Stößel aufweist. Der Kolben (3) der Bremspedaleinrichtung kann in einem ersten Druckraum zwischen dem Kolben (3) und dem Schwimmkolben (SK) verfahren werden und mit einem weiteren Stößel sowie einem weiteren Kolben gekoppelt werden, der wiederum in einen zweiten Druckraum gegen eine Rückstellfeder verfahren werden kann. Die hydraulische Anbindung und die Funktion dieses Tandemhauptzylinders (THZ) ist wie in **Fig. 5a****.** Das Rückschlagventil RV3 ist über eine weitere hydraulische Leitung und einer weiteren Öffnung im Tandemhauptzylinder mit dem Rückraum des Schwimmkolbens (SK) verbunden.

### Bezugszeichenliste

- RB1-4: Radbremse
- RZ1-4: Radzylinder
- SV1-4: Schaltventile
- EV1-4: Einlassventile
- AV1-4: Auslassventile
- BK1, BK2: Bremskreis
- DG, DG2: Drucksensor
- SHZ: Einzelhauptzylindereinheit
- THZ, DHZ: Tandemhauptzylindereinheit bzw. synonym Doppelhauptzylinder
- KWS: Kraftwegsensor
- GWS: Gierwinkelsensor
- Sp1, Sp2: Pedalwegsensor
- Sp: Pedalweg
- Fp: Pedalkraft
- BP1, BP2: Bypassventil
- ZAV, ZAV2: (zentrales) Auslassventil
- FV, FV2: Einspeiseschaltventil
- TV: Trennventil
- RV1-6: Rückschlagventil
- DV: Druckbereitstellungseinheit
- HCU: hydraulische Steuereinheit
- ECU: Elektronische Steuereinheit
- VB: Vorratsbehälter
- WS: Wegsimulator
- SK: Schwimmkolben des Tandemhauptzylinders
- D1: Sekundärdichtung des Hauptzylinders
- D2: Primärdichtung des Hauptzylinders
- D3: Primärdichtung des Wegsimulators
- D4: Sekundärdichtung des Schwimmkolbens
- D5: Primärdichtung des Schwimmkolbens
- D1r: redundante Sekundärdichtung des Hauptzylinders
- D2r: redundante Primärdichtung des Hauptzylinders
- D3r: redundante Primärdichtung des Wegsimulators
- Dr1, Dr4: Drossel in der Anbindung zwischen Hauptzylinder und Vorratsbehälter
- Dr2: Drossel in der Anbindung zwischen Hauptzylinder und Wegsimulator
- Dr3: Drossel im Wegsimulator
- Dr5: Drossel im Staudruckventil 19
- V_{D}: Diagnoseventil
- RF, RF1-3: Rückstellfeder
- PD1-4: Magnetventile im Anschluss der zweikreisigen Doppelhubkolbenpumpe
- F: Feder
- 1: Bremspedal
- 2: Pedalstößel
- 3: Hauptzylinderkolben
- 3a: Teil des Hauptzylinderkolbens
- 4: Hauptzylindergehäuse
- 5: PCB
- 6: Füllstandssensorelement
- 7: Sensortarget
- 8: Schwimmer im Vorratsbehälter
- 9: elektronische Elemente für Wegsimulator für Kraftcharakteristik
- 10: redundanter elektrischer Anschluss des Einspeiseschaltventils
- 11: Doppelhubkolben mit Spindelantrieb
- 12: redundanter Anschluss an Motor für 2 x 3 Phasenwicklung
- 13: elektrischer Stecker zum Bordnetzanschluss
- 14: Wegsimulatortrennventil
- 15: Rastkugel
- 16: Sensorstange
- 17: Vorratsbehälterabsperrventil
- 18: Kugelventil
- 19: Staudruckventil
- 20: Ventilplatte
- 21: Kraft-Weg-Charakteristik für das Bremspedal

## Patentansprüche

1. Bremssystem für ein Fahrzeug, folgende Komponenten umfassend:
- mindestens zwei hydraulische Bremskreise (BK1, BK2) mit jeweils mindestens einer hydraulisch wirkenden Radbremse (RB1, RB2, RB3, RB4);
- mindestens eine Druckversorgungseinrichtung (DV), welche über eine hydraulische Leitung mit einem Bremskreis (BK1, BK2) verbunden ist;
- ein Schaltventil (SV1, SV2, SV3, SV4) je hydraulisch wirkender Radbremse (RB1, RB2, RB3, RB4), welches jeweils eine hydraulisch wirkende Radbremse (RB1, RB2, RB3, RB4) mit einem der beiden Bremskreise (BK1, BK2) schaltbar verbindet;
- mindestens eine über mindestens ein Auslassschaltventil (ZAV) schaltbare hydraulische Verbindung zwischen mindestens einem der Bremskreise (BK1, BK2) und einem Vorratsbehälter (VB);
- und ein hydraulisches Bremspedalsystem, von dem ein hydraulischer Ausgang über ein Einspeiseschaltventil (FV) schaltbar an mindestens einen Bremskreis (BK1, BK2) gekoppelt ist;
wobei das Bremssystem mindestens eine über mindestens ein Bypass-Schaltventil (BP1) schaltbare hydraulische Verbindung zwischen den beiden Bremskreisen (BK1 und BK2) umfasst, **dadurch gekennzeichnet, dass** das mindestens eine Bypass-Schaltventil (BP1) ein Magnetventil ist.

2. Bremssystem gemäß Anspruch 1, wobei der Druckabbau in der mindestens einen hydraulisch wirkenden Radbremse (RB1, RB2, RB3, RB4) durch Öffnung des Auslassschaltventils (ZAV) und des zugehörigen Schaltventiles (SV1, SV2, SV3, SV4) erfolgt.

3. Bremssystem gemäß Anspruch 1 oder 2, wobei die mindestens eine Druckversorgungseinrichtung (DV) eine Rotationspumpe umfasst;
optional, wobei die Rotationspumpe als Zahnradpumpe oder als Mehrkolbenpumpe, insbesondere Dreikolbenpumpe, ausgeführt ist.

4. Bremssystem gemäß einem der vorhergehenden Ansprüche, wobei die Druckversorgungseinrichtung (DV) über ein zur Druckversorgungseinrichtung (DV) hin schließendes Rückschlagventil (RV3) oder über ein Magnetventil mit zumindest einem der Bremskreise (BK1, BK2) verbunden ist.

5. Bremssystem gemäß Anspruch 3, wobei die Mehrkolbenpumpe direkt mit zumindest einem der Bremskreise (BK1, BK2) verbunden ist, wobei direkt verbunden bedeutet, dass kein Ventil bzw. keine Druckbeeinflussungsvorrichtung zwischen der Mehrkolbenpumpe und dem zumindest einen Bremskreis (BK1, BK2) vorhanden ist, optional können in der Mehrkolbenpumpe ein oder mehrere Rückschlagventile integriert sein.

6. Bremssystem gemäß einem der vorhergehenden Ansprüche, wobei die Schaltventile (SV1, SV2, SV3, SV4) stromlos offene Schaltventile sind, und das Bypass-Schaltventil (BP1) ein stromlos offenes Bypass-Schaltventil ist, und das Auslassschaltventil (ZAV) ein stromlos geschlossenes Auslassschaltventil ist, und das Einspeiseschaltventil (FV) ein stromlos offenes Einspeiseschaltventil ist.

7. Bremssystem gemäß einem der vorhergehenden Ansprüche, wobei die Schaltventile (SV1, SV2, SV3, SV4) derart ausgeführt und angeschlossen sind, dass ein Restdruck in einer Radbremse (RB1, RB2, RB3, RB4) im stromlosen Fall das jeweilige Schaltventil (SV1, SV2, SV3, SV4) öffnet.

8. Bremssystem gemäß einem der vorhergehenden Ansprüche, wobei eine ABS- und/oder ESP-Regelung über mindestens ein Schaltventil (SV1, SV2, SV3, SV4) und das Auslassschaltventil (ZAV) erfolgen kann.

9. Bremssystem gemäß einem der vorhergehenden Ansprüche, wobei kein Ventil zwischen dem Auslassschaltventil (ZAV) und zumindest einem der Schaltventile (SV3, SV4) eines der Bremskreise (BK2) vorhanden ist.

10. Bremssystem gemäß einem der vorhergehenden Ansprüche, wobei kein Ventil zwischen dem Bypass-Schaltventil (BP1) und zweien, bevorzugt allen vieren, der Schaltventile (SV1, SV2, SV3, SV4) vorhanden ist.

11. Bremssystem gemäß einem der vorhergehenden Ansprüche, wobei nur genau das Auslassschaltventil (ZAV) die Bremskreise (BK1, BK2) schaltbar mit dem Vorratsbehälter (VB) verbindet.

12. Bremssystem gemäß einem der vorhergehenden Ansprüche, wobei jede Radbremse (RB1, RB2, RB3, RB4) nur genau das zugehörige Schaltventil (SV1, SV2, SV3, SV4) aufweist.

13. Bremssystem gemäß einem der Ansprüche 1 bis 10 oder 12, wobei ein zweites Auslassschaltventil (ZAV2) vorhanden ist, das direkt mit dem Ausgang der Druckversorgungseinrichtung (DV) bzw. mit einem zugehörigen Rückschlagventil (RV3) verbunden ist und mit dem Vorratsbehälter (VB) schaltbar verbindet, insbesondere wobei nur genau das Auslassschaltventil (ZAV) und das zweite Auslassschaltventil (ZAV2) die Bremskreise (BK1, BK2) schaltbar mit dem Vorratsbehälter (VB) verbinden.

14. Bremssystem gemäß einem der Ansprüche 1 bis 8 oder 11 bis 13, wobei die zwei hydraulischen Bremskreise (BK1, BK2) über das Bypass-Schaltventil (BP1) sowie ein weiteres Bypass-Schaltventil (BP2), die in Reihe geschaltet sind, miteinander verbunden sind, wobei das Auslassschaltventil (ZAV) mit einen Leitungsabschnitt zwischen den beiden Bypass-Schaltventilen (BP1, BP2) verbunden ist.

15. Bremssystem gemäß einem der vorhergehenden Ansprüche, wobei zusätzlich ein Trennschaltventil (TV) vorhanden ist, das direkt mit dem Ausgang der Druckversorgungseinrichtung (DV) bzw. mit einem zugehörigen Rückschlagventil (RV3) verbunden ist und direkt mit mindestens einem der Schaltventile (SV1, SV2) verbunden ist.

## Claims

1. Brake system for a vehicle, comprising the following components:
- at least two hydraulic brake circuits (BK1, BK2), each with at least one hydraulically acting wheel brake (RB1, RB2, RB3, RB4);
- at least one pressure supply device (DV), which is connected via a hydraulic line to a brake circuit (BK1, BK2);
- a switching valve (SV1, SV2, SV3, SV4) for each hydraulically acting wheel brake (RB1, RB2, RB3, RB4), which switching valve switchably connects in each case one hydraulically acting wheel brake (RB1, RB2, RB3, RB4) to one of the two brake circuits (BK1, BK2);
- at least one hydraulic connection, which is switchable by means of at least one outlet switching valve (ZAV), between at least one of the brake circuits (BK1, BK2) and a reservoir (VB);
- and a hydraulic brake pedal system, a hydraulic output of which is switchably coupled by means of an infeed switching valve (FV) to at least one brake circuit (BK1, BK2);
wherein the brake system comprises at least one hydraulic connection, which is switchable by means of at least one bypass switching valve (BP1), between the two brake circuits (BK1 and BK2),
**characterized in that** the at least one bypass switching valve (BP1) is a solenoid valve.

2. Brake system according to Claim 1, wherein the pressure in the at least one hydraulically acting wheel brake (RB1, RB2, RB3, RB4) is reduced by opening the outlet switching valve (ZAV) and the associated switching valve (SV1, SV2, SV3, SV4).

3. Brake system according to Claim 1 or 2, wherein the at least one pressure supply device (DV) comprises a rotary pump;
optionally, wherein the rotary pump is designed as a gear pump or as a multi-piston pump, in particular a three-piston pump.

4. Brake system according to one of the preceding claims, wherein the pressure supply device (DV) is connected to at least one of the brake circuits (BK1, BK2) via a check valve (RV3) that closes towards the pressure supply device (DV) or via a solenoid valve.

5. Brake system according to Claim 3, wherein the multi-piston pump is connected directly to at least one of the brake circuits (BK1, BK2), wherein directly connected means that no valve or no pressure-influencing device is present between the multi-piston pump and the at least one brake circuit (BK1, BK2), and optionally one or more check valves may be integrated in the multi-piston pump.

6. Brake system according to one of the preceding claims, wherein the switching valves (SV1, SV2, SV3, SV4) are switching valves that are open when electrically deenergized, and the bypass switching valve (BP1) is a bypass switching valve that is open when electrically deenergized, and the outlet switching valve (ZAV) is an outlet switching valve that is closed when electrically deenergized, and the infeed switching valve (FV) is an infeed switching valve that is open when electrically deenergized.

7. Brake system according to one of the preceding claims, wherein the switching valves (SV1, SV2, SV3, SV4) are designed and connected in such a manner that a residual pressure in a wheel brake (RB1, RB2, RB3, RB4) opens the respective switching valve (SV1, SV2, SV3, SV4) in the electrically deenergized state.

8. Brake system according to one of the preceding claims, wherein ABS and/or ESP control can be performed by means of at least one switching valve (SV1, SV2, SV3, SV4) and the outlet switching valve (ZAV).

9. Brake system according to one of the preceding claims, wherein no valve is present between the outlet switching valve (ZAV) and at least one of the switching valves (SV3, SV4) of one of the brake circuits (BK2).

10. Brake system according to one of the preceding claims, wherein no valve is present between the bypass switching valve (BP1) and two, preferably all four, of the switching valves (SV1, SV2, SV3, SV4).

11. Brake system according to one of the preceding claims, wherein only specifically the outlet switching valve (ZAV) switchably connects the brake circuits (BK1, BK2) to the reservoir (VB).

12. Brake system according to one of the preceding claims, wherein each wheel brake (RB1, RB2, RB3, RB4) has only specifically the associated switching valve (SV1, SV2, SV3, SV4).

13. Brake system according to one of Claims 1 to 10 or 12, wherein a second outlet switching valve (ZAV2) is present, which is connected directly to the output of the pressure supply device (DV) or to an associated check valve (RV3) and switchably connects to the reservoir (VB), in particular wherein only specifically the outlet switching valve (ZAV) and the second outlet switching valve (ZAV2) switchably connect the brake circuits (BK1, BK2) to the reservoir (VB).

14. Brake system according to one of Claims 1 to 8 or 11 to 13, wherein the two hydraulic brake circuits (BK1, BK2) are connected to one another via the bypass switching valve (BP1) and a further bypass switching valve (BP2), which are connected in series, wherein the outlet switching valve (ZAV) is connected to a line section between the two bypass switching valves (BP1, BP2).

15. Brake system according to one of the preceding claims, wherein an isolating switching valve (TV) is additionally present, which is connected directly to the output of the pressure supply device (DV) or to an associated check valve (RV3) and is connected directly to at least one of the switching valves (SV1, SV2).

## Revendications

1. Système de freinage pour un véhicule, comprenant les composants suivants :
- au moins deux circuits de freinage hydrauliques (BK1, BK2) pourvus chacun d'au moins un frein de roue à action hydraulique (RB1, RB2, RB3, RB4) ;
- au moins un dispositif d'alimentation en pression (DV), lequel est relié à un circuit de freinage (BK1, BK2) par une conduite hydraulique ;
- une soupape de commande (SV1, SV2, SV3, SV4) pour chaque frein de roue à action hydraulique (RB1, RB2, RB3, RB4), laquelle relie respectivement de manière commutable un frein de roue à action hydraulique (RB1, RB2, RB3, RB4) à l'un des deux circuits de freinage (BK1, BK2);
- au moins une liaison hydraulique commutable, par l'intermédiaire d'au moins une soupape de commande d'échappement (ZAV), entre au moins l'un des circuits de freinage (BK1, BK2) et un réservoir de stockage (VB) ;
- et un système de pédale de frein hydraulique, dont une sortie hydraulique est couplée de manière commutable à au moins un circuit de freinage (BK1, BK2) par l'intermédiaire d'une soupape de commande d'alimentation (FV) ;
le système de freinage comprenant au moins une liaison hydraulique commutable par l'intermédiaire d'au moins une soupape de commande de dérivation (BP1) entre les deux circuits de freinage (BK1 et BK2), **caractérisé en ce que** ladite au moins une soupape de commande de dérivation (BP1) est une électrovanne.

2. Système de freinage selon la revendication 1, dans lequel la réduction de pression dans ledit au moins un frein de roue à action hydraulique (RB1, RB2, RB3, RB4) s'effectue par ouverture de la soupape de commande d'échappement (ZAV) et de la soupape de commande (SV1, SV2, SV3, SV4) associée.

3. Système de freinage selon la revendication 1 ou 2, dans lequel ledit au moins un dispositif d'alimentation en pression (DV) comprend une pompe rotative ;
et facultativement, dans lequel la pompe rotative est réalisée sous forme de pompe à engrenages ou de pompe multipistons, en particulier de pompe à trois pistons.

4. Système de freinage selon l'une quelconque des revendications précédentes, dans lequel le dispositif d'alimentation en pression (DV) est relié à au moins l'un des circuits de freinage (BK1, BK2) par l'intermédiaire d'un clapet anti-retour (RV3) se fermant vers le dispositif d'alimentation en pression (DV) ou par l'intermédiaire d'une électrovanne.

5. Système de freinage selon la revendication 3, dans lequel la pompe multipistons est directement reliée à au moins l'un des circuits de freinage (BK1, BK2), dans lequel par directement reliée, il est entendu qu'aucune soupape ni aucun dispositif agissant sur la pression n'est présent entre la pompe multipistons et ledit au moins un circuit de freinage (BK1, BK2), un ou plusieurs clapets anti-retour pouvant facultativement être intégrés dans la pompe multipistons.

6. Système de freinage selon l'une quelconque des revendications précédentes, dans lequel les soupapes de commande (SV1, SV2, SV3, SV4) sont des soupapes de commande ouvertes en l'absence de courant, et la soupape de commande de dérivation (BP1) est une soupape de commande de dérivation ouverte en l'absence de courant, et la soupape de commande d'échappement (ZAV) est une soupape de commande d'échappement fermée en l'absence de courant, et la soupape de commande d'alimentation (FV) est une soupape de commande d'alimentation ouverte en l'absence de courant.

7. Système de freinage selon l'une quelconque des revendications précédentes, dans lequel les soupapes de commande (SV1, SV2, SV3, SV4) sont conçues et reliées de telle sorte qu'une pression résiduelle dans un frein de roue (RB1, RB2, RB3, RB4) ouvre la soupape de commande (SV1, SV2, SV3, SV4) respective en cas d'absence de courant.

8. Système de freinage selon l'une quelconque des revendications précédentes, dans lequel une régulation ABS et/ou ESP peut être effectuée par l'intermédiaire d'au moins une soupape de commande (SV1, SV2, SV3, SV4) et de la soupape de commande d'échappement (ZAV).

9. Système de freinage selon l'une quelconque des revendications précédentes, dans lequel aucune soupape n'est présente entre la soupape de commande d'échappement (ZAV) et au moins l'une des soupapes de commande (SV3, SV4) de l'un des circuits de freinage (BK2).

10. Système de freinage selon l'une quelconque des revendications précédentes, dans lequel aucune soupape n'est présente entre la soupape de commande de dérivation (BP1) et deux, et de préférence la totalité des quatre soupapes de commande (SV1, SV2, SV3, SV4).

11. Système de freinage selon l'une quelconque des revendications précédentes, dans lequel seule la soupape de commande d'échappement (ZAV) relie de manière commutable les circuits de freinage (BK1, BK2) au réservoir de stockage (VB).

12. Système de freinage selon l'une quelconque des revendications précédentes, dans lequel chaque frein de roue (RB1, RB2, RB3, RB4) ne comporte que la soupape de commande (SV1, SV2, SV3, SV4) associée.

13. Système de freinage selon l'une quelconque des revendications 1 à 10 ou 12, dans lequel une seconde soupape de commande d'échappement (ZAV2) est présente, laquelle est directement reliée à la sortie du dispositif d'alimentation en pression (DV) ou à un clapet anti-retour (RV3) associé et établit une liaison commutable avec le réservoir de stockage (VB), en particulier, dans lequel seule la soupape de commande d'échappement (ZAV) et la seconde soupape de commande d'échappement (ZAV2) relient de manière commutable les circuits de freinage (BK1, BK2) au réservoir de stockage (VB).

14. Système de freinage selon l'une quelconque des revendications 1 à 8 ou 1 à 13, dans lequel les deux circuits de freinage hydrauliques (BK1, BK2) sont reliés l'un à l'autre par l'intermédiaire de la soupape de commande de dérivation (BP1) ainsi que d'une autre soupape de commande de dérivation (BP2), lesquelles sont reliées en série, la soupape de commande d'échappement (ZAV) étant reliée à un partie de conduite entre les deux soupapes de commande de dérivation (BP1, BP2).

15. Système de freinage selon l'une quelconque des revendications précédentes, dans lequel une soupape de commande de séparation (TV) supplémentaire est présente, laquelle est directement reliée à la sortie du dispositif d'alimentation en pression (DV) ou à un clapet anti-retour (RV3) associé et est directement reliée à au moins l'une des soupapes de commande (SV1, SV2).
